# EUROPÄISCHE PATENTSCHRIFT

(11) **EP 0 567 153 B1**
(45) Veröffentlichungstag und Bekanntmachung des Hinweises auf die Patenterteilung: **25.11.1998**
(21) Anmeldenummer: 93106670.8
(22) Anmeldetag: 23.04.1993
(51) Int. Cl.: G01N 29/22, G01N 29/26

(54) **Ultraschallprüfvorrichtung**
Ultrasonic test device
Dispositif de contrôle par ultrasons

(30) Priorität: 23.04.1992 DE 9205542 U
(43) Veröffentlichungstag der Anmeldung: 27.10.1993
(73) Patentinhaber: TÜV Anlagen- und Umwelttechnik GmbH Unternehmensgruppe TÜV Bayern, 80686 München (DE)
(72) Erfinder: Jakob, Michael, Dr., W-8000 München 70 (DE); Schlecht, Karl, W-8000 München 40 (DE)
(74) Vertreter: Grünecker, Kinkeldey, Stockmair & Schwanhäusser Anwaltssozietät

(56) Entgegenhaltungen:
- US-A- 4 167 121
- US-A- 5 036 707
- J.Krautkrämer, H.Krautkrämer: Ultrasonic testing of materials, Third Edition, Springer-Verlag Berlin Heidelberg New York, 1983, S.444

## Beschreibung

Die Erfindung betrifft Ultraschallprüfvorrichtung mit den Merkmalen des Oberbegriffs des Patentanspruchs 1.

Bei einer aus der Praxis vorbekannten Ultraschallprüfvorrichtung wird eine Gasflasche zur Prüfvorrichtung transportiert und mit ihrer Längsachse horizontal ausgerichtet auf der Prüfvorrichtung abgelegt. Eine Prüfkopfhalterung mit einer Anzahl von Prüfköpfen wird an einem Ende der Gasflasche an deren Mantelfläche herangeführt und nach Wasserankopplung der Prüfköpfe an die Mantelfläche wird der Prüfvorgang gestartet. Gleichzeitig wird die Prüfkopfhalterung entlang der Längsachse der Gasflasche fortbewegt und die Flasche um ihre Längsachse gedreht. Auf diese Weise ergibt sich mittels der Prüfköpfe eine spiralförmige Abtastspur. Es können beispielsweise fünf Prüfköpfe zur Ermittlung der Wanddicke und von Defekten in relativ zur Längsrichtung der Gasflasche longitudinaler beziehungsweise transversaler Richtung verwendet werden. Aus J. Krautkrämer, H. Krautkrämer: Ultrasonic Testing of Materials, Third Edition, Seiten 444, 445, Springer-Verlag Berlin Heidelberg New York (1983) sind verschiedene Prüfköpfe mit Wasserankopplung bekannt.

Bei dieser vorbekannten Vorrichtung müssen die Gasflaschen vor der Prüfung aus der vertikalen in die horizontale Richtung und nach der Prüfung aus der horizontalen wieder in die vertikale Richtung umgesetzt werden. Daher ist wenigstens eine Umsetzvorrichtung an jeder Ultraschallprüfvorrichtung anzuordnen, wodurch die Vorrichtung aufwendig und teuer wird. Durch die horizontale Anordnung der Gasflasche während der Messung ist der Platzbedarf für die Ultraschallprüfvorrichtung relativ groß. Bei einer Höhe der Gasflasche von beispielsweise 1,80 m muß die Gesamtlänge der Vorrichtung zum horizontalen Transport der Gasflasche mindestens 3,60 m betragen.

Aus der US-A-5 036 707 ist eine Ultraschallprüfvorrichtung bekannt, bei der insbesondere der gekrümmte Schulterbereich an einem oberen Ende einer Gasflasche auf Materialfehler oder dergleichen untersucht werden soll. Die Gasflasche wird vertikal auf einem Untergrund aufgestellt und durch einen Ständer gehalten. Der Ständer umfaßt drei seitliche Stützstangen, die sich in Längsrichtung der Gasflasche erstrecken, und eine untere, in etwa halbringförmige und eine obere ringförmige Halterung. Mit der ringförmigen Halterung sind die Stützstangen verschraubt und durch eine Anzahl von Muttern ist die Position der Halterung fixiert. Die ringförmige Halterung weist nach innen vorstehende, durch Federn vorgespannte Stößel auf, die an der Mantelfläche der Gasflasche anliegen und diese relativ zur ringförmigen Halterung zentrieren.

An der Halterung ist ein Scanner gelagert, der entlang der ringförmigen Halterung um die Gasflasche herum bewegbar ist. Durch nach oben vertikal abstehende Arme ist der eigentliche Prüfkopf des Scanners in einer Halterung in vertikaler Richtung verstellbar gelagert. Durch eine gabelförmige Verschwenkeinrichtung ist der Prüfkopf mit seiner Halterung um eine horizontale Achse verschwenkbar gelagert. Auf diese Weise soll ein Abtasten und Anpassen an die gekrümmte Form des Schulterbereichs der Gasflasche erzielt werden. Um entsprechende Materialfehler und dergleichen, insbesondere radial zur Gasflasche verlaufende Fehler, feststellen zu können, ist der Prüfkopf um einen Winkel in Richtung auf die Gasflasche und um einen Winkel zur Längsachse der Gasflasche geneigt.

Gemäß US-A-5 036 707 wird speziell der Schulterbereich der Gasflasche abgetastet, wobei diese stationär gehalten wird und zum Einkoppeln des Ultraschalls in die Gasflasche wird deren Schulterbereich mit einer Beschichtung aus vorzugsweise Glyzerin versehen.

Ausgehend von der US-A-5 036 707 liegt daher der Erfindung die Aufgabe zugrunde, eine Ultraschallprüfvorrichtung dahingehend zu verbessern, daß eine vereinfachte Abtastung der Gasflasche entlang ihres gesamten Mantels möglich ist, wobei die Gasflasche sicher gehalten und gleichzeitig um ihre Längsachse positionsgenau und reproduzierbar drehbar ist.

Diese Aufgabe wird bei einer Ultraschallprüfvorrichtung mit den Merkmalen des Oberbegriffs des Anspruchs 1 durch die zusätzlichen Merkmale des Kennzeichens des Anspruchs 1 gelöst.

Bei der Erfindung ist die Gasflasche innerhalb der Vorrichtung vertikal angeordnet. Für die Prüfung ist es möglich, die Flasche zu drehen und den Prüfkopf systematisch die Außenfläche der Flasche abtasten zu lassen. Dies kann zum Beispiel durch eine Kombination der Drehbewegung der Flasche mit einer Vertikalbewegung des Prüfkopfes erfolgen. Der Prüfkopf tastet die Flasche also entlang einer Schraubenlinie ab. Die zu prüfende Gasflasche braucht aber in der erfindungsgemäßen Vorrichtung nicht unbedingt strikt vertikal gehalten zu sein. Auch eine gewisse Schrägstellung kann vor allem in Zusammenhang mit der Prüfung des Flaschenbodens von Vorteil sein. Kippt man nämlich die Flasche gegenüber der Vertikalen, so wird der Boden von der Seite besser zugänglich. Zugleich erreicht man hierdurch bei gewölbtem Boden eine bessere Benetzung des Bodens für die Ultraschallprüfung. Taucht man die zu überprüfende Gasflasche für die Überprüfung des Flaschenbodens in ein Wasserbecken, so kann man durch die Schrägstellung unerwünschte Luftblasen ausschalten.

Durch das gezielte Abtasten der Außenfläche der zu prüfenden Gasflasche durch die Prüfköpfe ist eine direkte Zuordnung zwischen der Abtastbewegung und den einzelnen Punkten der Flaschenoberfläche erreichbar. Die Flaschenoberfläche ist beispielsweise mittels eines geeigneten Koordinatensystems darstellbar, wobei die Schadensstellen entsprechend im Koordinatensystem eingetragen werden. Dies bringt den Vorteil, daß man Schadensstellen eindeutig identifizieren kann. Die Koordinatendarstellung mit den Schadensstellen ist über einen Drucker, Monitor oder dergleichen ausgebbar.

Da gemäß der Erfindung der Prüfkopf im wesentlichen entlang der Längsachse beweglich gelagert ist, ergibt sich durch die Drehung der Gasflasche und die vertikale Bewegung des Prüfkopfes in einfacher Weise eine spiralförmige Abtastspur, die wenigstens die gesamte Mantelfläche überdeckt. Übergänge vom zylindrischen Bereich zum Hals und Boden der Flasche werden dabei ultraschallmäßig mit erfaßt. Ein Ende der Gasflasche ist drehbar gelagert und dem anderen Ende ist eine Dreheinrichtung mit einem Drehantrieb und einer mit diesem bewegungsverbindbaren Greifvorrichtung für das obere Ende der Gasflasche zuordbar. Auf diese Weise ist die Gasflasche an beiden Enden während der Drehung abgestützt. Vor der Prüfung ist die Gasflasche in einfacher Weise zwischen Drehlager und Dreheinrichtung anordbar.

Um die Anordnung einer Gasflasche auch bei unterschiedlichen Flaschengrößen in der Ultraschallprüfvorrichtung zu erleichtern, ist von Vorteil, wenn die Greifvorrichtung zwischen einer Arbeitsstellung und einer Bereitschaftsstellung vertikal bewegbar ist, wobei in Arbeitsstellung die Greifvorrichtung einen Gasflaschenkopf beziehungsweise die Schutzkappe ergreift. In Bereitschaftsstellung ist die Greifvorrichtung so weit nach oben bewegt, daß die Gasflasche einfach auf dem gegenüberliegenden Drehlager abstellbar ist. Danach wird die Greifvorrichtung abgesenkt, ergreift den Gasflaschenkopf und wird mittels des Drehantriebs in Rotation versetzt.

Bei einer Ausführungsform der Erfindung ist das untere Ende auf einem Kugellager drehbar gelagert, welches in einer Grundplatte der Ultraschallprüfvorrichtung angeordnet ist. Die Gasflasche ist auf dem Kugellager in einfacher Weise positionier- und zentrierbar. Außer den sogenannten Konkavböden sind auch Integralböden und aufgeschrumpfte Rundfüße lagerbar.

Dabei ist es weiterhin von Vorteil, wenn das Kugellager zum Anheben der Gasflasche vertikal verstellbar ist. Dadurch kann die Prüfvorrichtung mittels einer Stechkarre leicht beschickt werden.

Bei einer einfachen Vorrichtung zum Anheben der Gasflasche ist das Kugellager an einem oberen Ende einer Hubstange ausgebildet, deren unteres Ende über Hebel mit einem Hubzylinder verbunden ist. Der Hubzylinder ist hydraulisch oder pneumatisch betätigbar, wobei ein Kolben des Hubzylinders die Hubstange mittels der Hebel anhebt.

Dabei erweist es sich als günstig, wenn der Hubzylinder zur Platzersparnis im wesentlichen horizontal angeordnet ist.

Bei einer anderen Ausführungsform der Erfindung ist auf einer Grundplatte der Ultraschallprüfvorrichtung wenigstens eine einem Umfangsrand eines Bodens der Gasflasche zuordbare Rolle drehbar gelagert. Auch bei dieser Ausführungsform ist die Gasflasche einfach in die Ultraschallprüfvorrichtung einsetzbar, wobei der Umfangsrand des Gasflaschenbodens auf der Rolle abgesetzt wird. Durch die dem anderen Ende der Gasflasche zugeordnete Dreheinrichtung wird die Gasflasche in Zusammenwirkung mit der Rolle sicher gehalten. Statt einer Rolle sind in entsprechender Weise auch zwei, drei oder mehr Rollen zur Abstützung des Umfangsrandes anordbar.

Um Gasflaschen mit unterschiedlichem Durchmesser in der gleichen Ultraschallprüfvorrichtung untersuchen zu können, ist es von Vorteil, wenn wenigstens eine Rolle relativ zum Gasflaschenboden im wesentlichen radial verstellbar gelagert ist.

In diesem Zusammenhang ist es insbesondere günstig, wenn die Rolle an einem Rollenende eines Schwenkhebels drehbar gelagert ist, wobei der Schwenkhebel auf der Grundplatte an seinem anderen Schwenkende zumindest horizontal verschwenkbar gelagert ist. Durch Verstellen des Schwenkhebels ist die Rolle in einfacher Weise verstellbar und an unterschiedliche Gasflaschendurchmesser anpaßbar.

Ist der Schwenkhebel an seinem Schwenkende an einer Schwenkplatte um eine horizontale Schwenkachse und diese an der Grundplatte um eine vertikale Schwenkachse verschwenkbar gelagert, ist der Schwenkhebel und die ihm zugeordnete Rolle beispielsweise über eine Hebebrücke mit angeschlossenem Pneumatikzylinder höhenverstellbar. Dies kann genutzt werden, um die Flasche beim Be- und Entladen, beispielsweise mittels einer Stechkarre, anheben und absenken zu können.

Dabei ist es weiterhin günstig, wenn der Schwenkhebel in der Nähe des Rollenendes in einer vertikalen Führung geführt ist. Auf diese Weise wird der Schwenkhebel bei der Höhenverstellung sicher geführt.

Um auch bei relativ schmalen Schwenkhebeln Rollen mit hinreichender Breite drehbar lagern zu können, erweist es sich als günstig, wenn am Rollenende zur Lagerung der Rolle eine Lagerplatte ausgebildet ist. Auf dieser ist beispielsweise die Rolle mit ihrer Drehachse unter einem Winkel zur Längsachse des Schwenkhebels anordbar. Der Winkel kann dabei so gewählt sein, daß die Drehachse der Rolle im wesentlichen radial zur Gasflasche angeordnet ist.

Um in einfacher Weise die Schwenkhebel und Rollen an Gasflaschen unterschiedlichen Durchmessers anzupassen, ist es günstig, wenn die Lagerplatte und/oder die Führung Indexbohrungen zum Verstellen des Schwenkhebels in Abhängigkeit vom Gasflaschendurchmesser aufweisen. Auf diese Weise sind die Schwenkhebel je nach Gasflasche horizontal verschwenkbar und werden mittels der Indexbohrungen beispielsweise relativ zur Grundplatte befestigt.

Bei einer vorteilhaften Ausführungsform sind vier Schwenkhebel angeordnet, von denen zwei horizontal und zwei horizontal und vertikal verschwenkbar sind, wobei die beiden horizontal verschwenkbaren Schwenkhebel unterhalb der anderen beiden Schwenkhebel angeordnet sind. Dabei können die Rollen paarweise diametral einander gegenüberliegend relativ zur Gasflasche angeordnet sein, wobei diese Rollen zu unterschiedlich verschwenkbaren Schwenkhebel gehören.

Um ein Absenken bzw. Anheben der Gasflasche beim Abstellen in der Ultraschallprüfvorrichtung oder bei deren Entnahme mittels beispielsweise einer Stechkarre zu erleichtern, ist es weiterhin von Vorteil, wenn den horizontal und vertikal verschwenkbaren Schwenkhebeln eine Hebeeinrichtung zugeordnet ist.

In einfachster Weise ist der Drehantrieb ein mit seiner Antriebsachse parallel zur und in Richtung der Drehachse ausgerichteter bzw. verstellbarer Motor. Durch die vertikale Verstellbarkeit des Motors sind über entsprechende Einrichtungen Greifvorichtung und Motor zur Drehung der Gasflasche bewegungsverbindbar. Durch die Ausrichtung der Antriebsachse parallel zur Drehachse kann die Bewegungsverbindung zwischen Greifvorrichtung und Motor direkt mit der Antriebsachse erfolgen. Ein aufwendiges Getriebe ist nicht notwendig.

Um die Schrägstellung der Gasflasche in einfacher Weise zu ermöglichen, wird bei einer Ausführungsform der Erfindung die Gasflasche von der Greifvorrichtung unter Bildung eines spitzen Winkels zwischen Längsachse und einer Vertikalen schräg gehalten wird. Die Schrägstellung der Gasflasche kann durch die Greifvorrichtung ohne Abstützung am Gasflaschenboden oder mit einer entsprechenden Abstützung erfolgen.

In diesem Zusammenhang ist es weiterhin von Vorteil, wenn die Schrägstellung der Gasflasche dadurch bestimmt ist, daß ein vom Schwerpunkt der Gasflasche gewähltes Lot im wesentlichen durch den Umfangsrand des Gasflaschenbodens verläuft. Auf diese Weise ist bei am Gasflaschenboden abgestützter Gasflasche eine labile Gleichgewichtslage gegeben und die Gasflasche muß theoretisch nicht seitlich abgestützt werden.

Dabei ist es weiterhin von Vorteil, wenn ein Heb- und Senkzylinder zur gemeinsamen vertikalen Bewegung von Motor und Greifvorrichtung angeordnet ist. In diesem Fall ist der Motor im wesentlichen direkt oberhalb der Greifvorrichtung anordbar.

Um den Motor leicht von der Greifvorrichtung lösen zu können oder bei einer Behinderung der Drehung der Gasflasche den Motor von der Greifvorrichtung zu entkoppeln, ist es von Vorteil, wenn zwischen Motor und Greifvorrichtung eine Kupplung angeordnet ist.

Bei einer Ausführungsform der Erfindung weist die Greifvorrichtung wenigstens drei verstellbare Greifbacken zum Ergreifen von Gasflaschenkopf oder Schutzkappe auf.

Um ein Eingreifen eines Benutzers der Ultraschallprüfvorrichtung in die Greifbacken zu verhindern, ist es günstig, wenn zumindest die Greifbacken von einer in Richtung zur Gasflasche offenen Aufnahmeglocke umgeben sind. Während des Absenkens der Greifvorrichtung in Richtung der Gasflasche ist der Gasflaschenkopf zumindest im Bereich der Greifbacken vollständig umschlossen. Die Aufnahmeglocke kann als Zentrierglocke ausgebildet sein, so daß die Gasflasche beim Überstülpen der Aufnahmeglocke relativ zur Greifvorrichtung ausgerichtet wird.

Um die Positionierung der Greifvorrichtung zu automatisieren, ist es günstig, wenn in der Aufnahmeglocke eine Lichtschranke ausgebildet ist. Auf diese Weise senkt sich die Greifvorrichtung nur so weit ab, bis der Gasflaschenkopf sicher ergriffen werden kann. Auch bei unterschiedlich großen Gasflaschen ist so eine automatische Positionierung gewährleistet.

Die Lichtschranke weist eine in der Aufnahmeglocke ausgebildete Lichteintrittsöffnung und eine dieser zugeordnete, außerhalb der Aufnahmeglocke angeordnete Lichtquelle auf. Nur das Lichtempfangselement, z. B. ein Spiegel, ist innerhalb der Aufnahmeglocke angeordnet.

Durch Verwendung einer Reflexionsfläche innerhalb der Aufnahmeglocke und gegenüberliegend zur Lichteintrittsöffnung, kann das Lichtempfangselement integriert mit der Lichtquelle ausgebildet sein. Hierdurch vermeidet man eine separate Energieversorgung innerhalb der drehenden Aufnahmeglocke.

Um eine Ausrichtung der Gasflasche in Richtung er Aufnahmeglocke zu erleichtern und die Gasflasche während der Drehung zu stützen, weist die Ultraschallprüfvorrichtung bei einer vorteilhaften Ausführungsform Stützeinrichtungen mit an die Mantelfläche verschwenkbaren Klemmarmen auf. Diese werden nach Aufstellen der Gasflasche auf ihrem Drehlager an die Mantelfläche angelegt, so daß die Gasflasche in Richtung zur Greifvorrichtung zumindest teilweise ausgerichtet ist. Die weitere Ausrichtung der Greifvorrichtung kann durch das Überstülpen der Aufnahmeglocke erfolgen. Auf diese Weise ist sichergestellt, daß Längsachse der Gasflasche und Drehachse übereinstimmen.

Jede Stützeinrichtung kann beispielsweise drei Klemmarme umfassen. Dabei sind beispielsweise zwei Klemmarme in Einführrichtung in die Ultraschallprüfvorrichtung hinter der Gasflasche angeordnet. Der andere Klemmarm wird nach Einführen der Gasflasche von vorne an diese herangeschwenkt, so daß die Gasflasche entlang ihrer Längsrichtung von den drei Klemmarmen gehalten wird. Die hinteren Klemmarme sind in ihrer Funktion als veränderlicher Anschlag auch als feststehende Anschlagklemmarme ausbildbar, an die die Gasflasche beim Einsetzen angelegt werden kann.

Dabei ist es weiterhin von Vorteil, wenn die Stützeinrichtungen beidseitig zur Gasflasche angeordnet sind und die jeweiligen Klemmarme sich einander gegenüber liegen. Der Abstand der Klemmarme ist dabei mindestens auf einer Seite der Mantellinie so groß, daß die Prüfköpfe in vertikaler Richtung zwischen den Klemmarmen hindurchführbar sind.

Um eine möglichst geringe Reibung zwischen Klemmarmen und Mantelfläche während der Drehung der Gasflasche zu erhalten, ist es weiterhin günstig, wenn an den der Mantelfläche zugeordneten Enden der Klemmarme Laufrollen zum Abrollen auf der Mantelfläche angeordnet sind.

Dadurch, daß die Stützeinrichtung zum stufenlosen Verschwenken wenigstens eines Klemmarmes einen Schwenkzylinder oder eine Spindel aufweist, ist die Betätigung der Klemmarme automatisiert. Der Schwenkzylinder kann als pneumatisch oder hydraulisch betätigbarer Zylinder ausgebildet sein.

Um die Prüfköpfe einfach entlang der Mantelfläche zu bewegen und an die Gasflaschen heranzuführen, ist es von Vorteil, wenn die Prüfkopfhalterung in vertikaler und zur Anlage an die Mantelfläche in horizontaler Richtung verstellbar gelagert ist.

Um Ungleichmäßigkeiten bei der Drehung der Gasflasche und Unwuchten ausgleichen zu können, ist die Prüfkopfhalterung zumindest teilkardanisch oder kugelgelagert aufgehängt. Dadurch kann die Prüfkopfhalterung mit den empfindlichen Prüfköpfen eine Ausweichbewegung ausführen oder Ungleichmäßigkeiten während der Rotation der Gasflasche besser folgen. Die Prüfkopfhalterung ist dabei so gelagert, daß sie eine Haltungspräferenz aufweist, d.h., daß die Prüfkopfhalterung in ihrer Bereitschaftsstellung zur Anlage an die Mantelfläche einer Gasflasche ausgerichtet ist. Bei entsprechenden Auslenkungen der Prüfkopfhalterung erfolgt eine automatische Rückstellung.

In diesem Zusammenhang ist es weiterhin günstig, wenn zur Anpassung an unterschiedliche Flaschendurchmesser die Prüfkopfhalterung einen Adapter für den jeweiligen Gasflaschendurchmesser aufweist.

Zur einfachen Versorgung der Prüfkopfhalterung mit Wasser und zur Aufrechterhaltung einer ausreichenden Wasserankopplung ist es günstig, wenn die Wasserversorgung über eine Versorgungsleitung mit einer in der Prüfkopfhalterung ausgebildeten Wasserkammer verbunden ist. Die Wasserversorgung ist dabei so eingestellt, daß die Wasserkammer immer vollständig gefüllt ist. Aus der Wasserkammer ausfließendes und entlang der Mantelfläche der Gasflasche nach unten abfließendes Wasser wird durch eine Umwälzpumpe jeweils ersetzt.

Dabei ist es weiterhin von Vorteil, wenn die Umrandung aes Adapters als Spritzwasserschutzring ausgebildet ist. Dieser liegt an der Mantelfläche an und verhindert, daß aus der Wasserkammer austretendes Wasser von der Mantelfläche abprallt und wegspritzt.

Um das Abfließen von Spritzwasser während und von Restwasser nach Beendigung des Prüfvorgangs zu erleichtern und vor Beginn des Prüfvorgangs eine Befüllung der Prüfkopfhalterung mit Wasser zu erleichtern, ist von Vorteil, wenn in Adapter und/oder Wasserkammer Wasserabflußöffnungen und/oder eine Luftaustrittsöffnung ausgebildet sind. Eine Wasserabflußöffnung dient zur gezielten Ableitung von durch den Spritzwasserschutzring gesammelten Spritzwassers während des Prüfvorgangs. Mittels einer zusätzlichen Wasserabflußöffnung fließt alles nach Beendigung des Prüfvcrgangs in der Prüfkopfhalterung vorhandenes Restwasser ab, wodurch die Prüfköpfe zwischen den Ultraschallprüfungen trocken sind. Dadurch wird eine Korrosion der Prüfköpfe vermindert. Aufgrund der Luftaustrittsöffnung tritt bei Beginn einer Ultraschallprüfung in der Prüfkopfhalterung enthaltene und durch von unten eindringendes Wasser verdrängte Luft in einfacher Weise aus.

Um der Wasserkammer im wesentlichen Wasser mit immer dem gleichen Druck zuzuführen, ist es von Vorteil, wenn Prüfkopfhalterung und ein als Wasserversorgung ausgebildeter Wasserbehälter in festem vertikalen Abstand zueinander angeordnet und gemeinsam vertikal bewegbar sind. Dadurch ist der vertikale Abstand zwischen Wasserbehälter und Prüfkopfhalterung während der gesamten Prüfung der Gasflasche konstant, so daß aus dem Wasserbehälter austretendes Wasser immer eine gegenüber den Prüfköpfen gleich große potentielle Energie aufweist.

Um ein Einsetzen und Austauschen der Prüfköpfe zu erleichtern, ist es weiterhin von Vorteil, wenn zur Aufnahme von Prüfköpfen in der Prüfkopfhalterung Fixierbohrungen ausgebildet sind.

Bei einer vorteilhaften Ausführungsform der Erfindung sind die Prüfköpfe sogenannte "paint brush"-Prüfköpfe. Aufgrunddessen erfolgt keine punktförmige Abtastung sondern eine feldförmige Abtastung, so daß die spiralförmige Abtastspur einen größeren Gangabstand als bei bekannten Ultraschallprüfvorrichtung aufweist.

Weiterhin sind Prüfköpfe verwendbar, die ein konvergierendes Ultraschallsignal aussenden, wobei der Brennpunkt innerhalb oder außerhalb der Gasflasche liegt. Auf diese Weise wird ein Abschnitt der Mantelfläche feldförmig abgetastet, wobei das Wasser strahlförmig auf die Mantelfläcne aufgespritzt wird und beim Auftreffen auf die Mantelfläche so zerläuft, daß gerade das vom Ultraschall bestrahlte Feld benetzt wird. Werden Prüfköpfe zur Prüfung des Flaschenbodens eingestzt, werden die Prüfköpfe bei einer Ausführungsform unterhalb des Flaschenbodens in einem Wasserauffangbecken getaucht angeordnet. Bei der Prüfung taucht der untere Rand der Flasche in das Wasser ein und eine eventuelle Luftblase unter dem Flaschenboden wird durch geeignete Maßnahmen, wie zum Beispiel durch einen Wasserstrahl, eine Pumpe oder dergleichen entfernt, um die Ankopplung des Ultraschalls zu gewährleisten.

Um die Prüfungen einfach aufzuzeichnen und verarbeiten zu können, ist es günstig, wenn die Prüfköpfe zur Speicherung der Auswertung von Messungen mit einer elektronischen Speicher- und Auswerteeinrichtung verbunden sind. Weiterhin können aufrufbare Parameter wie Flaschengrößen, Fußformen, Werkstoffe und dergl. vorher abgespeichert werden. Diese sind durch einfachen Tastendruck abrufbar und die Ultraschallprüfvorrichtung ist schnell anpaßbar, so daß große Flaschenmengen bewältigt werden können.

Die Speicher- und Auswerteeinrichtung kann weiterhin so ausgebildet sein, daß jedem Punkt der abgetasteten Oberfläche der Gasflasche eine Koordinate zugeordnet wird. Dies kann durch Überwachung der Drehung der Gasflasche und entsprechende Überwachung der Verstellung des Prüfkopfes erfolgen. Die entsprechenden Bewegungen werden in zweidimensionale Koordinatendarstellung umgerechnet, so daß jeder erfaßte Fehler der Gasflasche eindeutig auf ihrer Oberfläche festgelegt ist. Bei der Koordinatendarstellung der Gasflaschenoberfläche sind die obengenannten, variierbaren Parameter entsprechend berücksichtigbar. Dies ermöglicht bei noch eingespannter Flasche ein reproduzierbares Wiederanfahren einer Fehlerstelle für weitere Untersuchungen.

Um in einfacher Weise das entlang der Mantelfläche und aus der Wasserabflußöffnung abfließende bzw. austretende Wasser zu sammeln, ist bei einer Ausführungsform der Erfindung unterhalb der Gasflasche ein Wasserauffangbecken angeordnet. Dieses erstreckt sich im wesentlichen so weit, daß alles aus der Prüfkopfhalterung austretende Wasser aufgefangen wird. Durch Verbindung des Wasserauffangbeckens mit dem Wasserbehälter und mittels einer Pumpe ist das aufgefangene Wasser an den Wasserbehälter zurückführbar, so daß ein geschlossener Wasserkreislauf entsteht. Auf diese Weise wird der Wasserverbrauch der Ultraschallprüfvorrichtung gesenkt.

In diesem Zusammenhang ist es weiterhin von Vorteil, wenn das Wasserauffangbecken in der Grundplatte ausgebildet ist und die Schwenkhebel mit ihren Lagerrollen unterhalb einer Wasserlinie angeordnet sind. Auf diese Weise wird die Gesamthöhe der Ultraschallvorrichtung verringert und gleichzeitig ein einfaches Ablaufen des vom Prüfkopf verwendeten Wasserstroms entlang der Mantelfläche der Gasflasche gewährleistet.

Bei einer vorteilhaften Ausführungsform der Erfindung ist die Ultraschallprüfvorrichtung als mobile Einheit mit Grundplatte und Rahmen ausgebildet. Auf bzw. in der Grundplatte ist beispielsweise das Wasserauffangbecken und das Drehlager für die Gasflasche anordbar. Am Rahmen und an der Grundplatte sind die Führungen für die Klemmarme der Stützeinrichtungen befestigbar. Weiterhin sind Wasserversorgung, Prüfkopfhalterung sowie Dreheinrichtung und Greifvorrichtung an Grundplatte oder Rahmen fixierbar oder an an diesen befestigten Führungen bewegbar. Die Speicher- und Auswerteeinheit sowie entsprechende Betätigungs- und Steuereinrichtungen für die Ultraschallprüfvorrichtunq sind ebenfalls an Grundplatte oder Rahmen anordbar.

Die erfindungsgemäß vorgeschlagenen Lösungen und vorteilhafte Ausführungsbeispiele davon werden im folgenden anhand der in der Zeichnung dargestellten Figuren weiter erläutert und beschrieben.

Es zeigen:
- Figur 1: eine Seitenansicht der erfindungsgemäßen Ultraschallprüfvorrichtung;
- Figur 2: eine Vorderansicht der erfindungsgemäßen Vorrichtung;
- Figur 3: einen Schnitt entlang der Linie III-III aus Figur 2;
- Figur 4: eine Seitenansicht gemäß Figur 1 mit einer kleineren Gasflasche;
- Figur 5: eine Vorderansicht einer Prüfkopfhalterung;
- Figur 6: einen Schnitt entlang der Linie VI-VI aus Figur 5;
- Figur 7: eine Draufsicht auf eine Grundplatte, und
- Figur 8: einen Schnitt entlang der Linie VIII-VIII aus Figur 7.

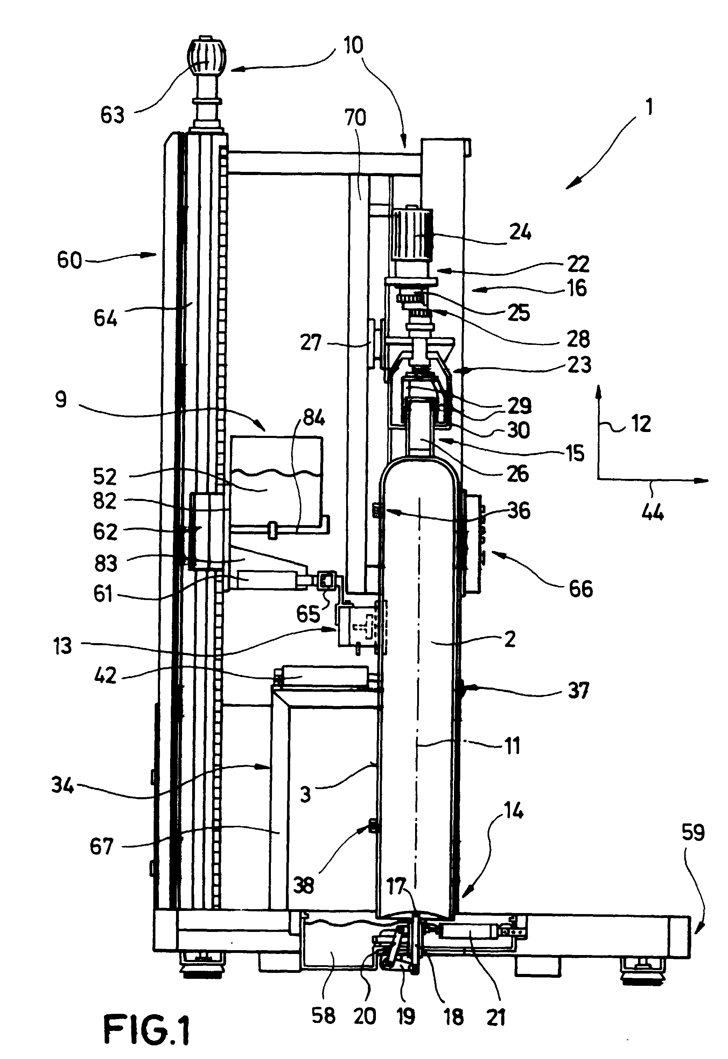

In Figur 1 ist eine Seitenansicht einer Ultraschallprüfvorrichtung 1 dargestellt. Auf einer Grundplatte 59 und einem an dieser befestigten Rahmen 60 ist die eigentliche Prüfvorrichtung zur Prüfung einer Gasflasche 2 gehaltert.

Die Gasflasche 2 ist auf der Grundplatte 59 in etwa mittig zu dieser mit ihrem unteren Ende 14 drehbar gelagert. Dazu steht eine nach oben gewölbte Bodenfläche des unteren Endes 14 auf einem oberen Ende einer Hubstange 18 angeordnetem Kugellager 17 auf. Zur Höhenverstellung der Hubstange 18 ist diese über einen Hubhebel 19 und einen Umlenkhebel 20 mit einem Pneumatikzylinder 21 verbunden. Der Hubhebel 19 ist am unteren Ende der Hubstange 18 mit einem Ende verschwenkbar gelagert, während sein anderes Ende über den Umlenkhebel 20 mit dem aus dem Hubzylinder 21 ausschiebbaren Kolben bewegungsverbunden ist. Hubstange 21, Hubhebel 19, Umlenkhebel 20 und Hubzylinder 21 sind in der Grundplatte 59 angeordnet, wobei der Hubzylinder 21 im wesentlichen in horizontaler Richtung 44 angeordnet und die Hubstange 18 im wesentlichen in vertikaler Richtung 12 verschiebbar gelagert ist.

Die Gasflasche 2 ist mit ihrer Längsachse 11 in vertikaler Richtung 12 ausgerichtet, wobei ihr oberes Ende 15 in einer am oberen Teil des Rahmens 16 angeordneten Dreheinrichtung 16 gehaltert ist. Die Dreheinrichtung 16 weist einen Drehantrieb 22 und eine Greifvorrichtung 23 auf. Der Drehantrieb 22 umfaßt einen Motor 24, der mit seiner Antriebsachse 25 parallel zur Längsachse 11 der Gasflasche 2 ausgerichtet ist. Die aus dem Motor 24 nach unten hervorstehende Antriebsachse 25 ist über eine Kupplung 28 mit der Greifvorrichtung 23 bewegungsverbunden.

Die Greifvorrichtung 23 weist drei das obere Ende 15 der Gasflasche 2 ergreifende Greifbacken 29 auf, die sich im wesentlichen gegenüber liegen und einen das obere Ende 15 der Gasflasche 2 bildenden Gasflaschenkopf 26, beispielsweise eine aufgeschraubte Schutzkappe, im wesentlichen beidseitig ergreifen. Aufgrund der drehbaren Lagerung der Gasflasche 2 auf dem Kugellager 17 und der Drehung der Greifvorrichtung 23 mittels des Drehantriebs 22 ist die Gasflasche 2 um ihre als Drehachse ausgebildete Längsachse 11 drehbar.

Die Greifbacken 29 sind von einer Aufnahmeglocke 30 umgeben, in deren unteres Ende der Gasflaschenkopf 26 durch eine Aufnahmeöffnung einschiebbar ist. Innerhalb der Aufnahmeglocke 30 ist der eingeschobene Abschnitt des Gasflaschenkopfes 26 von den Greifbacken 29 eingeklemmt. Zur Höhenverstellung der Drehantrieb 22 und Greifvorrichtung 23 umfassenden Dreheinrichtung 16 ist diese oberhalb der Aufnahmeglocke 30 an einer vertikalen Drehantriebsführung 70 mittels eines Arms 27 höhenverstellbar gelagert. Zur Höhenverstellung des Armes 27 ist innerhalb der Drehantriebsführung 70 ein in Figur 1 nicht sichtbarer Hub- und Senkzylinder angeordnet.

Zur Ausrichtung der Gasflasche 2 zwischen Kugellager 17 und Greifvorrichtung 23 und zur Abstützung während einer Drehung um ihre Längsachse 11 sind an eine Mantelfläche 3 der Gasflasche 3 Klemmarme 36, 37 und 38 anlegbar. Der erste Klemmarm 36 liegt an der Mantelfläche 3 unterhalb des Gasflaschenkopfes 26 an. Der zweite Klemmarm 37 liegt in etwa auf halber Höhe der Gasflasche 2 und der dritte Klemmarm 38 im unteren Drittel der Gasflasche 2 an ihrer Mantelfläche 3 an. Während Klemmarme 36 und 38 im wesentlichen auf der linken Seite der Gasflasche 2 anliegen, liegt der Klemmarm 37 auf der rechten Seite an. Zum Verschwenken der Klemmarme 36, 37 und 38 an die Mantelfläche 3 der Gasflasche 2 sind diese mittels eines Schwenkzylinders 42 verschwenkbar. Schwenkarme und Schwenkzylinder bilden eine Stützeinrichtung 34 für die Gasflasche 2. Der Schwenkzylinder 42 ist auf einem im wesentlichen L-förmigen Träger 67 angeordnet. Dessen längerer L-Schenkel steht vertikal von der Grundplatte 59 ab und erstreckt sich in etwa bis zur Höhenmitte der Gasflasche 2. Der kürzere L-Schenkel des Trägers 67 ist unterhalb des Schwenkzylinder 42 angeordnet und verläuft im wesentlichen horizontal in Richtunq zur Gasflasche 2.

Während die Gasflasche 2 im wesentlichen mittig zur Grundplatte 59 angeordnet ist, ist an einem Ende der Grundplatte eine Vertikalführung 64 zur Führung einer Prüfkopfhalterung 13 angeordnet. Die Vertikalführung 64 erstreckt sich im wesentlichen zwischen der Grundplatte 59 und dem oberen Ende des Rahmens 60. Durch einen am oberen Ende der Vertikalführung 64 angeordneten Motor 63 ist ein Traglager 62 entlang der Vertikalführung 64 verststellbar. Am Traglager 62 ist eine sich in vertikaler Richtung erstreckende Anschlußplatte 82 befestigt. Von dieser steht in horizontaler Richtung 44 eine Tragplatte 84 zur Aufnahme eines Wasserbehälters 52 und ein Tragarm 83 zur Halterung eines Vorschubzylinders 61 ab. Der Wasserbehälter 52 bildet eine Wasserversorgung 9 zur Wasserankopplung der Prüfkopfhalterung 13 an die Mantelfläche 3 der Gasflasche 2. Eine Verbindung zwischen Wasserbehälter 52 und Prüfkopfhalterung 13 ist zur Vereinfachung in Figur 1 nicht dargestellt.

Am Vorschubzylinder 61 ist die Prüfkopfhalterung 13 mittels einer lösbaren Kupplung 65 befestigt. Je nach Betätigung des Vorschubzylinders 61 ist die Prüfkopfhalterung 13 in horizontaler Richtung 44 an die Mantelfläche 3 der Gasflasche 2 anlegbar bzw. von dieser zurückziehbar. Gleichzeitig ist durch Betätigung des Motors 63 die Prüfkopfhalterung 13 sowie der Wasserbehälter 52 in vertikaler Richtung 12 verstellbar.

Die Motore 24 und 63 bilden eine Bewegungseinrichtung zur spiralförmigen Abtastung der Mantelfläche 3 der Gasflasche 2 der erfindungsgemäßen Ultraschallprüfvorrichtung 1.

Unterhalb der Gasflasche 2 ist in der Grundplatte 59 ein Wasserauffangbecken 58 angeordnet.

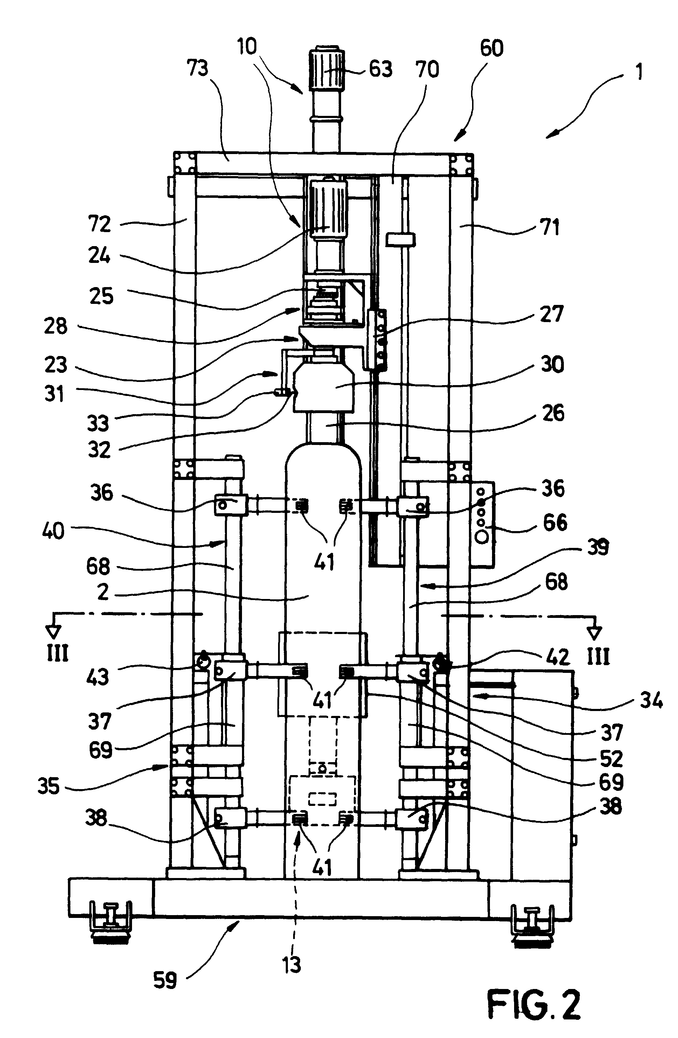

In Figur 2 ist eine Vorderansicht der erfindungsgemäßen Ultraschallprüfvorrichtung 1 dargestellt. Gleiche Bezugszeichen kennzeichnen gleiche Bauteile und werden nur noch teilweise erwähnt.

Der Rahmen 60 ist durch Vertikalträger 71 und 72 sowie diese an ihren oberen Ende verbindende Horizontalträger 73 gebildet. An den vorderen Vertikalträgern 71 und 72 sind beidseitig zur Gasflasche 2 Führungen 39 und 40 der Stützeinrichtungen 34 und 35 befestigt. Die Führungen umfassen jeweils eine Führungsstange 68 und einen auf dieser aufgeschobenen Zylinder 69. Am oberen Ende der Führungsstange 68 sind die Klemmarme 36 beidseitig zur Gasflasche 2 angeordnet und liegen von hinten an der Gasflasche 2 an. Am unteren Ende der Führungsstangen 68 sind ebenfalls beidseitig zur Gasflasche 2 die Klemmarme 38 angeordnet, die auf der gleichen Seite wie die Klemmarme 36 an der Gasflasche 2 anliegen. Am oberen Ende der Führungszylinder 69 sind die Klemmarme 37 angeordnet, die von vorne und gegenüberliegend zur Prüfkopfhalterung 13 an der Gasflasche 2 anliegen. An den freien Enden der Klemmarme 36, 37 und 38 sind zum Abrollen auf der Gasflasche 2 jeweils zwei Laufrollen 41 angeordnet, die um eine vertikale Drehachse drehbar gelagert sind. Die Klemmarme 37 sind entsprechend zur Figur 1 mit Schwenkzylindern 42 bzw. 43 verbunden. Bei Betätigung der Schwenkzylinder sind die Klemmarme 37 zwischen einer an der Gasflasche 2 anliegenden Anlagestellung gemäß Figur 2 und einer die Gasflasche 2 zur Entnahme aus der Ultraschallprüfvorrichtung 1 freigebenden Freigabestellung verschwenkbar.

In etwa mittig zwischen den Vertikalträgern 71 und 72 ist der Motor 24 und die Greifvorrichtung 23 angeordnet. Durch Betätigung des Motors 24 ist die über eine Kupplung 28 mit diesem drehverbundene Greifvorrichtung 23 und damit die Gasflasche 2 um ihre vertikale Drehachse drehbar. Die in Figur 1 dargestellten Greifbacken 29 sind innerhalb der Aufnahmeglocke 30 angeordnet und umgreifen den Gasflaschenkopf 26. Zum automatischen Absenken von Greifvorrichtung 23 und Motor 24 ist der Aufnahmeglocke 30 eine Lichtschranke 31 zugeordnet. Diese weist eine Lichtquelle 33 auf, die seitlich zur Aufnahmeglocke 30 angeordnet ist. Gegenüberliegend zur Lichtquelle 30 ist in der Aufnahmeglocke eine Lichteintrittsöffnung 32 ausgebildet. Ein zur Lichtschranke 31 gehörendes Lichtempfangselement, z.B. ein Spiegel, ist innerhalb der Aufnahmeglocke 30 angeordnet.

Oberhalb des Motors 24 steht über den Horizontalträger 73 der Motor 63 zur Verstellung der Prüfkopfhalterung 13 hervor. Gegenüber der Darstellung aus Figur 1 sind Prüfkopfhalterung 13 und Wasserbehälter 52 abgesenkt.

Zur Betätigung der Ultraschallprüfvorrichtung und zur Steuerung der Bewegungseinrichtung 10 sowie der Stützeinrichtungen 34 und 35 ist an dem Vertikalträger 71 ein Bedienungsfeld 66 mit einer Anzahl von Bedienungsknöpfen oder -schaltern angeordnet.

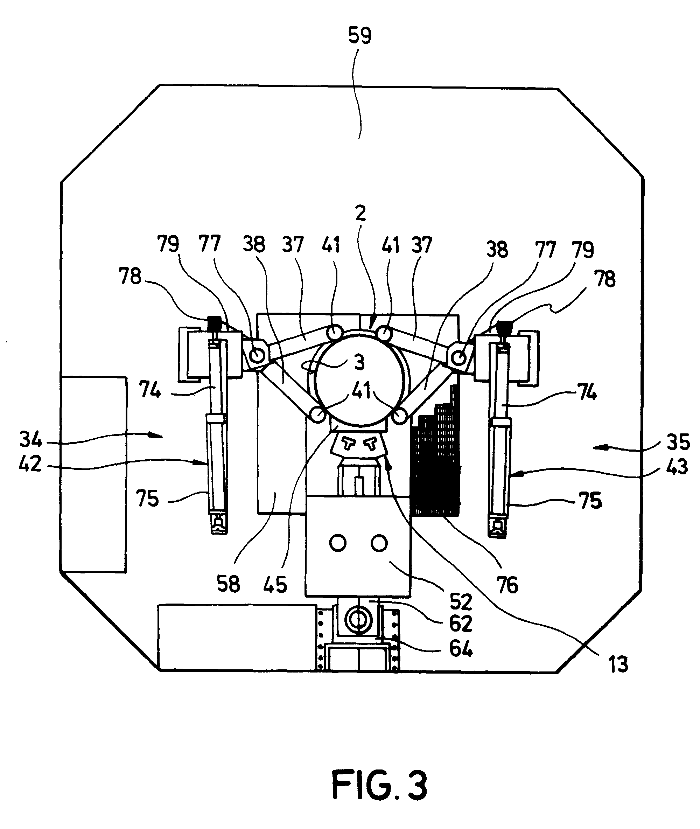

In Figur 3 ist ein Schnitt entlang der Linie III-III aus Figur 2 dargestellt.

Die Grundplatte 59 ist im wesentlichen quadratisch, wobei die Ecken abgekantet sind. Mittig zur Grundplatte 59 ist die Gasflasche 2 angeordnet. An dieser liegen auf ihrer Mantelfläche 3 die Laufrollen 41 der Klemmarme 37 und 38 an. Die Klemmarme 37 der Stützeinrichtungen 34 und 35 sind um Schwenklager 77 verschwenkbar gelagert und gegenüberliegend zur Prüfkopfhalterung 13 an die Gasflasche 2 angelegt. Zum Verschwenken der Klemmarme 37 ist an deren dem Schwenklager 77 zugeordneten Ende jeweils ein Klemmarmhebel 79 angeordnet. Dieser ist an seinem freien Ende mit Kolben 74 durch Klemmarmhebellager 78 verschwenkbar verbunden. Durch Einschub der Kolben 74 in Kolbenführungen 75 der Schwenkzylinder 42 und 43 sind die Klemmarme 37 in der Blattebene nach oben verschwenkbar.

Unterhalb der Klemmarme 37 sind gegenüberliegend zu diesen Klemmarme 38 beidseitig an der Gasflasche 2 anliegend angeordnet. Der Abstand zwischen den Laufrollen 41 der Klemmarme 38 ist größer als der Abstand der entsprechenden Laufrollen der Klemmarme 37. Zwischen den Laufrollen 41 der Klemmarme 38 ist entlang der Mantelfläche 3 in vertikaler Richtung die Prüfkopfhalterung 13 durchführbar.

Die Prüfkopfhalterung 13 ist in konstantem vertikalem Abstand vom Wasserbehälter 52 zusammen mit diesem entlang der Vertikalführung 64 mittels des Traglagers 62 verstellbar gelagert. Zur Anpassung an unterschiedliche Durchmesser von Gasflaschen 2 weist die Prüfkopfhalterung 13 einen Flaschenadapter 45 auf. Dieser ist mit seiner an der Gasflasche 2 anliegenden Seite entsprechend zur Krümmung der Gasflasche gekrümmt.

Unterhalb der Gasflasche 2 ist das Wasserauffangbecken 58 angeordnet. Dieses weist eine im wesentlichen quadratische Form auf und ist durch eine wasserdurchlassende Abdeckung 76 zumindest teilweise abgedeckt.

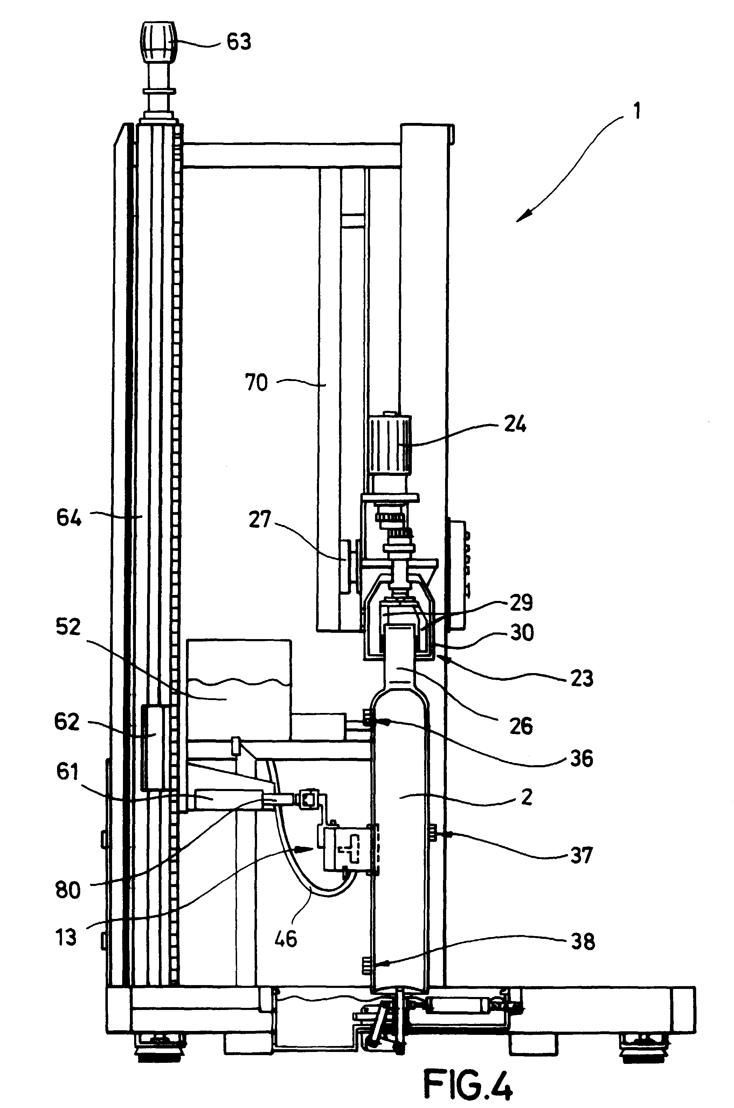

In Figur 4 ist die Ultraschallprüfvorrichtung 1 mit einer kleineren Gasflasche 2 gegenüber den Figuren 1 bis 3 dargestellt. Die Seitenansicht der Figur 4 entspricht der Seitenansicht aus Figur 1.

Zur Anpassung an die geringere Höhe der Gasflasche 2 gegenüber den Gasflaschen aus Figuren 1 bis 3 ist der Motor 24 und die Greifvorrichtung 23 entlang der Drehantriebsführung 70 bis nahe zu derem unteren Ende abgesenkt. Der Gasflaschenkopf 26 ist in die Aufnahmeglocke 30 angeführt und ist in dieser durch die Greifbacken 29 der Greifvorrichtung 23 eingeklemmt.

Der Abstand der Klemmarme 36, 37 und 38 ist entsprechend zur geringeren Höhe der Gasflasche 2 verringert. Die Klemmarme 36 und 38 sind entlang der Führungsstange 68 aus Figur 2 in Richtung zur Grundplatte 59 nach unten verschoben. Die Klemmarme 37 sind entlang der Führungszylinder 69 in etwa bis zur Mitte der Gasflasche 2 aus Figur 4 abgesenkt.

Die Prüfkopfhalterung 13 und der Wasserbehälter 52 sind durch den Motor 63 mittels des Traglagers 42 entlang der Vertikalführung 64 nach unten abgesenkt, wobei in der Darstellung gemäß Figur 4 die Prüfkopfhalterung 13 in etwa höhenmittig zur Gasflasche 2 angeordnet ist. zur Verbindung von Wasserbehälter 52 und Prüfkopfhalterung 13 ist zwischen diesen eine Versorgungsleitung 46 angeordnet.

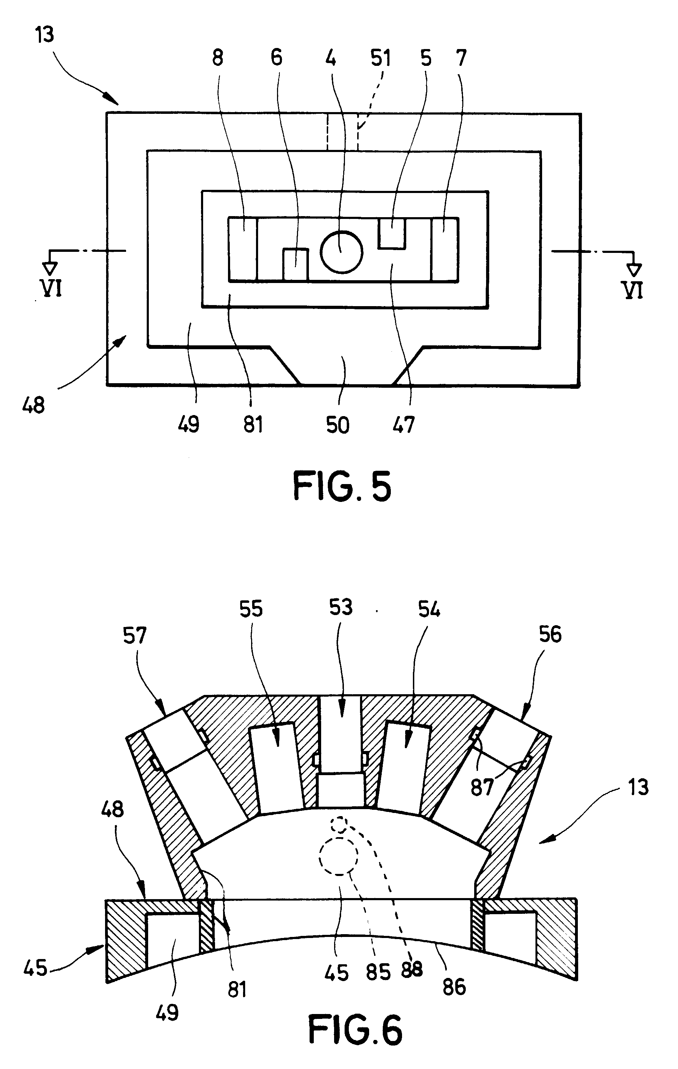

In Figur 5 ist eine Vorderansicht der Prüfkopfhalterung 13 dargestellt. Diese weist einen im wesentlichen rechteckförmigen Querschnitt auf. Eine äußere Umrandung 48 der Prüfkopfhalterung 13 ist zur Anlage an Mantelflächen von Gasflaschen ausgebildet. An der Unterseite weist die Umrandung eine Wasserabflußöffnung 50 auf, die mit einem Spritzwasserschutzring 49 und einer Wasserkammer 47 in Verbindung steht. Der Spritzwasserschutzring 49 bildet einen Teil der Umrandung 48 und nimmt das aus der Wasserkammer 47 austretende Wasser auf. Zur Begrenzung der Wasserkammer 47 ist diese von einer Wasserkammerumrandung 81 umgeben, die einen äußeren, rechteckförmigen Rand aufweist. Innerhalb der Wasserkammerumrandung 81 sind in der Wasserkammer 47 Prüfköpfe 4,5, 6, 7 und 8 zur Ultraschallprüfung angeordnet. Der Prüfkopf 4 weist einen kreisförmigen Querschnitt auf und ist mittig in der Wasserkammer 47 angeordnet. Jeweils am rechten bzw. linken Ende benachbart zur Umrandung 81 sind in der Wasserkammer 47 die Prüfköpfe 7 und 8 angeordnet. Diese weisen ein im wesentlichen rechteckförmigen Querschnitt auf. Zwischen den Prüfköpfen 7 und 4 bzw. 8 und 4 sind die Prüfköpfe 5 bzw. 6 angeordnet. Der Prüfkopf 6 ist relativ zum Prüfkopf 4 symmetrisch zum Prüfkopf 5 angeordnet. Die Breite und Höhe der Prüfköpfe 5, 6, 7 und 8 ist im wesentlichen gleich. Die Prüfköpfe 5, 6, 7 und 8 sind sogenannte "paint brush"-Prüfköpfe, die die Mantellinie der Gasflaschen flächig abtasten. Prüfköpfe 5, 6, 7 und 8 sind Winkelprüfköpfe, die in axialer und in Umfangsrichtung jeweils gegensinnig einschallen. Prüfkopf 4 ist ein Normalprüfkopf zur Wanddickenmessung.

Im Spritzwasserring 49 gesammeltes Wasser kann aus der Wasserabflußöffnung 50 gezielt abgeleitet werden. Zum Austritt von im Spritzwasserschutzring 49 bzw. in der Wassserkammer 47 enthaltene Luft bei Wasserzufuhr zur Prüfkopfhalterung 13 ist in der Umrandung 48 gegenüberliegend zur Wasserabflußöffnung 50 eine Luftaustrittsöffnung 51 angeordnet.

In Figur 6 ist ein Schnitt entlang der Linie VI-VI aus Figur 5 dargestellt.

In der Prüfkopfhalterung 13 sind von der im Flaschenadapter 45 gegenüberliegenden Seite Fixierbohrungen 53, 54, 55, 56 und 57 für die in Figur 5 dargestellten Prüfköpfe ausgebildet. Zur Fixierung der Prüfköpfe in den Fixierbohrungen sind in diesen Umfangsnuten 87 ausgebildet. Die Fixierbohrungen 53, 56 und 57 verlaufen im wesentlichen in der Zeichenebene der Figur 6, während die Fixierbohrungen 54 und 55 geneigt zur Zeichenebene angeordnet sind. Die Fixierbohrungen münden in der Wasserkammer 47, die seitlich von der Wasserkammerumrandung umgeben ist.

Zum Anlegen an Gasflaschen gemäß der Figuren 1 bis 4 ist gegenüberliegend zu den Fixierbohrungen der Flaschenadapter 45 der Prüfkopfhalterung 13 angeordnet. Dieser ist mit einer ringförmigen Umrandung 48 ausgebildet, in der zur Aufnahme von Spritzwasser ein Spritzwasserschutzring 49 ausgebildet ist. Zur Anlage an Gasflaschen mit entsprechender Außenkrümmung weist der Flaschenadapter 45 eine Anlagekrümmung 86 auf, die in Richtung zur Wasserkammer 47 konvex gekrümmt ist.

Zur Zufuhr von Wasser über Versorgungsleitung 46 vom Wasserbehälter 52 nach Figur 4 ist innerhalb der Wasserkammer 47 zwischen Fixierbohrung 53 und Adapter 45 ein Wassereintrittsöffnung 85 angeordnet. Eine zusätzliche Wasserabflußöffnung 88 ist zum Entleeren des Restwassers nach Prüfung in der Wasserkammer 47 vorgesehen.

Im folgenden wird die Ultraschallprüfung von Gasflaschen anhand der erfindungsgemäßen Ultraschallprüfvorrichtung kurz erläutert.

Gasflaschen unterschiedlicher Größe werden in die Ultraschallprüfvorrichtung eingesetzt, indem die Gasflaschen 2 mit ihrem unteren Ende auf dem Kugellager 17 und mit ihrem oberen Ende in der Aufnahmeglocke 30 angeordnet werden. Zur Ausrichtung der Gasflasche zwischen Kugellager und Aufnahmeglocke wird diese an ihrer Mantelfläche durch Klemmarme 36, 37 und 38 abgestützt. Zumindest die Klemmarme 37 der Stützvorrichtungen 34 und 35 sind zur Aufnahme der Gasflasche 2 in eine Aufnahmestellung verschwenkbar. Nach Positionieren der Gasflasche 2 auf dem Kugellager 17 ist durch Betätigung des Bedienungsfeldes 66 sowohl die Greifvorrichtung 23 als auch die Stützvorrichtungen 34 und 35 betätigbar.

Beim Absenken der Greifvorrichtung 23 wird deren Positionierung gegenüber dem Gasflaschenkopf durch die Lichtschranke 31 kontrolliert und automatisch gestoppt. Danach ergreifen die Greifbacken 29 den Gasflaschenkopf 26.

Das Bedienungsfeld 66 dient ebenfalls zur Steuerung der Stützeinrichtungen 34 und 35. Nachdem die Schwenkarme mit ihren Ablaufrollen 41 an der Mantellinie 3 der Gasflasche 2 anliegen, wird diese in Drehung versetzt. Zur Drehung wird der Motor 24 verwendet, der über eine Kupplung 28 mit seiner Antriebsachse 25 mit der Greifvorrichtung 23 bewegungsverbindbar ist. Auf diese Weise ist die Gasflasche 2 durch ihren von den Greifbacken 29 ergriffenen Gasflaschenkopf 26 um ihre Längsachse 11 drehbar.

Zur Überprüfung der Gasflasche 2 werden die in der Prüfkopfhalterung 13 angeordneten Prüfköpfe 5 bis 8 mittels des Flaschenadapters an die Mantelfläche 3 angelegt. Zur Verstellung der Prüfkopfhalterung in horizontaler Richtung dient der Vorschubzylinder 61 und zur Verstellung in vertikaler Richtung dient der Motor 63.

Bevor der Prüfvorgang eingeleitet wird, muß zur Wasserankopplung der Prüfköpfe an die Mantelfläche 3 die Wasserkammer 47 der Prüfkopfhalterung 13 mit Wasser gefüllt werden. Dazu wird über die Versorgungsleitung 46 Wasser vom Wasserbehälter 52 zugeführt. Die in der Prüfkopfhalterung 13 enthaltene Luft kann aus der Luftaustrittsöffnung 51 austreten. Ist die Wasserkammer 47 vollständig mit Wasser gefüllt, wird die Ultraschallprüfung gestartet.

Durch Drehen der Gasflasche 2 um ihre Längsachse 11 und gleichzeitige vertikale Verstellung der Prüfkopfhalterung 13 wird die Gasflasche 2 entlang einer spiralförmigen Abtastspur überprüft.

Die Prüfköpfe sind dabei so ausgebildet und angeordnet, daß der Prüfkopf 4 die Wandstärke der Gasflasche, die Prüfköpfe 5 und 6 Longitudinaldefekte und die Prüfköpfe 7 und 8 Transversaldefekte des Gasflaschenmantels detektieren.

Das durch die Wasseraustrittsöffnung 50 und aus der Wasserkammer 47 bzw. dem Spritzwasserschutzring 49 austretende Wasser läuft entlang der Gasflasche 2 nach unten ab und wird in dem in der Grundplatte angeordneten Wasserauffangbecken unterhalb der Gasflasche 2 gesammelt. Durch eine Pumpe ist das gesammelte Wasser an den Wasserbehälter 52 zurückführbar.

Nach Beendigung der Ultraschallprüfung wird die Wasserversorgung der Prüfkopfhalterung 13 unterbrochen und die Prüfkopfhalterung wird zurückgefahren. Noch in der Prüfkopfhalterung 13 vorhandenes Wasser läuft durch die Wasseraustrittsöffnung 50 und 88 nach unten ab. Danach werden Greifvorrichtung 23 und Drehantrieb 22 von den Gasflaschenkopf 26 abgezogen und die Klemmarme in ihre Freigabeposition verschwenkt. Darauffolgend ist die Gasflasche in einfacher Weise aus der Ultraschallprüfvorrichtung 1 entnehmbar.

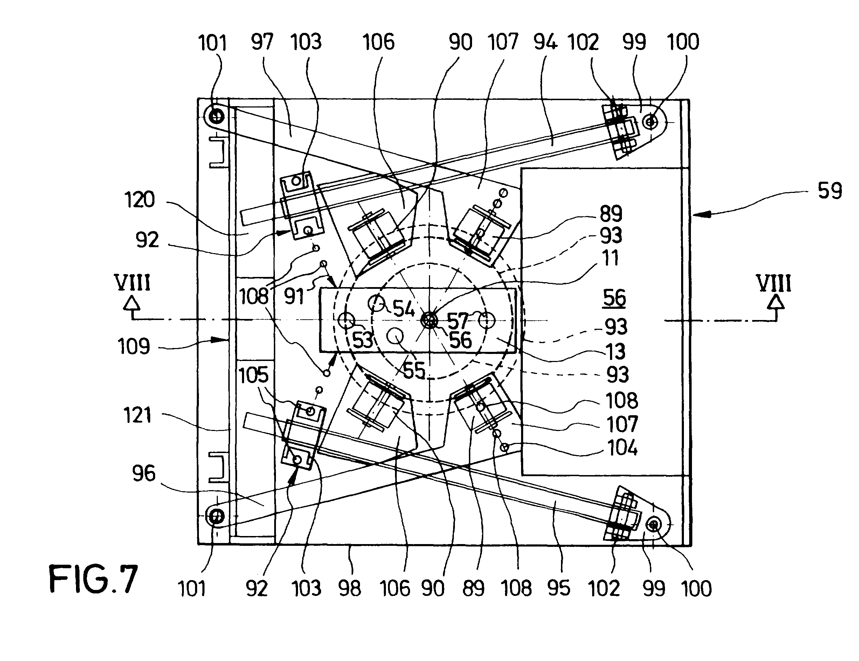

In Fig. 7 ist eine der Fig. 3 vergleichbare Darstellung der Grundplatte 59 dargestellt. Zur Vereinfachung sind die Stützeinrichtungen seitlich zur Gasflasche und Prüfkopf sowie Prüfkopfhalterung nicht dargestellt. Dementsprechende Führungen für den Prüfkopf sind in Fig. 7 beispielsweise am Beckenabsatz 88 des Wasserauffangbeckens 56 anordbar.

Die Grundplatte 59 weist einen im wesentlichen quadratischen Querschnitt auf und ist von einem vertikal abstehenden Rand 98 umrandet. Im wesentlichen mittig auf der Grundplatte 59 ist eine nicht dargestellte Gasflasche aufsetzbar. Die Gasflaschen können die gestrichelt dargestellten, unterschiedlichen Querschnitte 93 aufweisen. Mittig zu diesen Querschnitten ist die Längsoder Drehachse 11 der Gasflasche angeordnet.

In den vier Ecken der Grundplatte 59 sind vier Schwenkhebel 94, 95, 96 und 97 verschwenkbar gelagert. Die beiden Schwenkhebel 96 und 97 sind mit einem Ende um eine vertikale Drehachse an einem Lagerbolzen 101 verschwenkbar gelagert. Die Schwenkhebel 96 und 97 verlaufen geradlinig und weisen an ihrem freien Ende Lagerplatten 107 auf. Diese erstrecken sich von den Schwenkhebel in etwa in Richtung zur Drehachse 11. Auf den Lagerplatten 107 sind Rollen 89 drehbar gelagert. Die Lagerung erfolgt mittels zweier an den Enden jeder Rolle senkrecht von der Lagerplatte 107 nach oben abstehender Lagerflansche, welche zur drehbaren Halterung einer Drehachse für die Rollen 89 dienen. Die Drehachse jeder Rolle 89 ist dabei so ausgerichtet, daß sie im wesentlichen radial zu den Querschnitten 93 bzw. in Richtung zur Drehachse 11 verläuft.

Die Schwenkhebel 94 und 95 erstrecken sich von Schwenkplatten 99, die einen im wesentlichen V-förmigen Querschnitt aufweisen. Die Schwenkplatten 99 sind im Bereich der V-Spitze an der Grundplatte 59 um vertikale Schwenkachsen an Lagerbolzen 100 gelagert.

Gegenüberliegend zur V-Spitze sind die Schwenkhebel 94 und 95 eine horizontale Schwenkachse an Achsen 102 gelagert. Diese sind auf den Schwenkplatten 99 mittels zweier senkrecht abstehender Halteflansche drehbar gelagert. Die Halteflansche sind jeweils beidseitig zu einem Schwenkende der Schwenkhebel 94 und 95 angeordnet.

Die Schwenkhebel verlaufen geradlinig und weisen benachbart zu dem dem Schwenkende gegenüberliegenden Rollenende Lagerplatten 106 auf. Diese erstrecken sich im wesentlichen in einer Ebene parallel zur Grundplatte 59 auf der der Drehachse 11 der Gasflasche zuweisenden Seite der Schwenkhebel 94 und 95. Die Lagerplatten 106 sind von unten an den Schwenkhebeln 94 und 95 befestigt.

Auf der Lagerplatte 106 ist jeweils eine Rolle 90 mittels zweier Lagerböcke um eine Drehachse drehbar gelagert. Die Drehachse der Rolle 90 verläuft analog zur Drehachse der Rolle 89 radial zu den Querschnitten 93 bzw. in Richtung er Drehachse 11 der Gasflasche.

Die freien Enden der Schwenkhebel 94 und 95 sind mittels einer Führungseinrichtung 92 vertikal geführt. Die Führungseinrichtung 92 weist eine im wesentlichen rechteckige Grundplatte auf, von der ein zu den Schwenkhebeln 94 bzw. 95 offenes Führungsprofil 103 absteht. In der Grundplatte sind an beiden Enden zwei Indexbohrungen 105 ausgebildet. Diese fluchten mit entsprechenden Indexlöchern 108 der Grundplatte 59. Entsprechend zu den drei unterschiedlichen Querschnitten 93 von verschiedenen Gasflaschen sind in der Grundplatte 59 drei Indexlöcher 108 ausgebildet. Die Führungseinrichtung 92 ist in Richtung 91 entlang der Reihe von Indexlöchern 108 versetzbar. In der in Fig. 7 dargestellten Anordnung der Führungseinrichtung 92 ist die jeweilige Rolle 90 dem Querschnitt 93 mit dem größten Durchmesser zugeordnet.

Eine entsprechende Verstellung der Schwenkhebel 96 und 97 ist mittels der drei Indexbohrungen 104 in der Lagerplatte 107 und entsprechender Indexlöcher 108 der Grundplatte 59 möglich.

Die Rollen 89 und 90 der Schwenkhebel 94 und 96 sowie die entsprechenden Rollen der Schwenkhebel 95 und 97 sind jeweil diametral gegenüberliegend relativ zur Drehachse 11 der Gasflasche angeordnet.

Auf der Grundplatte 59 ist im Bereich des gestrichelt eingezeichneten Gasflaschenquerschnitt 93 ein Ultraschallprüfkopf 13 zur Abtastung eines Flaschenbodens angeordnet. Der Prüfkopf 13 weist eine im wesentlichen rechteckige Form mit fünf Fixierbohrungen 53, 54, 55, 56 und 57 entsprechend zur Figur 6 auf. In den Fixierbohrungen 53 bis 57 sind Ultraschallprüfköpfe einsetzbar. Die Fixierbohrung 56 ist konzentrisch zur Drehachse 11 der Gasflasche angeordnet. Die Fixierbohrungen 54 und 57 sind im wesentlichen im gleichen Abstand zur Fixierbohrung 56 und beidseitig versetzt bezüglich eines Durchmessers des kleinsten dargestellten Querschnitts 93 angeordnet. Die Fixierbohrung 53 liegt der Fixierbohrung 57 bezüglich der zentralen Fixierbohrung 56 gegenüber. Die Fixierbohrung 55 ist zur Fixierbohrung 54 bezüglich der Verbindungslinie der beiden Fixierbohrungen 53 und 57 auf deren anderer Seite angeordnet. Weiterhin verlaufen die Fixierbohrungen 53 und 57, siehe auch Figur 6, schräg in Richtung Gasflaschenboden aufeinander zu. Bei Drehung der auf die Rollen 89 und 90 aufgestellten Gasflasche tasten die in den Fixierbohrungen 53 bis 57 angeordneten Ultraschallprüfköpfe die gesamte Bodenfläche der Gasflasche ab.

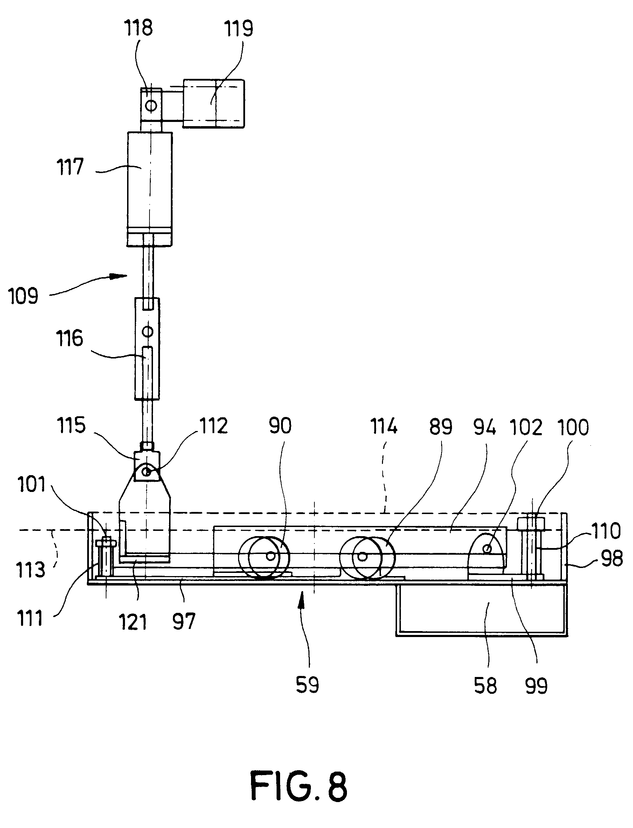

In Fig. 8 ist ein Schnitt entlang der Linie VIII-VIII aus Fig. 7 dargestellt. Gleiche Bezugszeichen kennzeichnen gleiche Teile und daher nur noch teilweise erwähnt.

In Fig. 8 ist ein Sollwasserstand 113 und eine Unterkante 114 eines zur Abdeckung des Wassers dienenden Gitters dargestellt, siehe auch Abdeckung 76 aus Fig. 3. Unterhalb des Wasserspiegels 113 sind die Schwenkhebel 94 und 97 angeordnet. Der Schwenkhebel 97 verläuft flach parallel zur Grundplatte 59. Oberhalb von diesen verläuft der Schwenkhebel 94, der im wesentlichen stabförmig ausgebildet ist. Der Schwenkhebel 94 ist um den Lagerbolzen 102 mit seinem Rollenende nach oben verschwenkbar gelagert. Der Lagerbolzen 102 ist oberhalb der Schwenkplatte 99 durch zwei Lagerflansche gelagert. Die Schwenkplatte 99 verläuft parallel zur Grundplatte 59 und liegt auf dieser auf. Gegenüberliegend zum Schwenkhebel 94 ist auf der Schwenkplatte 99 eine vertikale Lagerbuchse 110 angeordnet, in der der Lagerbolzen 100 angeordnet ist. Dieser steht von der Grundplatte 59 vertikal ab.

Der Schwenkhebel 97 ist analog zur Schwenkplatte 99 mittels einer Lagerbuchse 111 an einem Ende an dem von der Grundplatte 59 abstehenden Lagerbolzen 102 verschwenkbar gelagert. Vor einem Abnehmen der Lagerbuchsen 110 bzw. 111 von den Lagerbolzen 100 bzw. 101 sind diese durch entsprechende Vorrichtungen, wie Kontermuttern od. dgl. gesichert.

Nach Figur 7 ist den freien Enden der Schwenkhebel 94 und 95 eine Hebeeinrichtung 109 zugeordnet. In Figur 7 ist von der Hebeeinrichtung 109 nur eine Hebebrücke 121 dargestellt. Diese erstreckt sich über die gesamte Breite der Grundplatte 59 und ist benachbart zu dem Lagerbolzen 101 der Schwenkhebel 96 und 97 angeordnet.

In Figur 8 ist die Hebeeinrichtung 109 mit einer an einem Ende der Hebebrücke 121 angeordneten Lifteinrichtung 115, 116, 117 und 118 dargestellt. Eine solche Lifteinrichtung ist an beiden Enden der Hebebrücke 121 angeordnet, wobei an beiden Enden jeweils ein vertikal nach oben abstehender Anschlußflansch ausgebildet ist, an dessem oberen Ende die Lifteinrichtung an einem Verbindungsloch 112 verschwenkbar gelagert ist. Die Lifteinrichtung umfaßt einen Gabelkopf 115, der das Verbindungsloch 112 beidseitig umfaßt, einen von oben in den Gabelkopf eingeschraubte Kolbenstange 116, einen mit dieser verbundenen Pneumatik-Zylinder 117 und am oberen Ende des Pneumatik-Zylinders einen Lagerbock 118. Die Kolbenstange 116 ist mit einem Kolben des Pneumatik-Zylinders 117 über eine Einschraubhülse verbunden. Sowohl die Kolbenstange 116 als auch der Kolben des Pneumatik-Zylinders 117 sind in der Einschraubhülse zur Längenveränderung der Lifteinrichtung einschraubbar. Die Kolbenstange 116 ist gegen eine kürzere oder längere Kolbenstange austauschbar.

Die Lifteinrichtung ist beispielsweise im Bereich des Lagerbocks 118 an einem Rahmenelement der Ultraschallprüfvorrichtung 1, siehe Figur 1, befestigt. Zur Lagerung einer auf den Rollen 89 und 90 abgestellten Gasflasche ist am Lagerbock 118 ein Distanzstück 119 im wesentlichen rechtwinklig zur Längsrichtung der Lifteinrichtung gelagert. Dieses ist analog zu den Stützeinrichtungen 34 und 35, siehe Figur 1, mit der Mantelfläche der Gasflasche in Anlage. Bei entsprechender Betätigung des Pneumatik-Zylinders 117 werden Kolbenstange 116, Gabelkopf 115, Hebebrücke 121 und damit die auf der Hebebrücke in Aussparungen 120 aufgelegten freien Enden der Schwenkhebel 94 und 95 angehoben. Auf diese Weise sind die Schwenkhebel um Lagerbolzen 102 vertikal verschwenkbar.

Die freien Enden der Schwenkhebel 94 und 95 liegen bei Verstellung in Schwenkrichtung 91 in den Aussparungen 21 auf, wobei bei der in Figur 7 dargestellten Position der Schwenkhebel, deren freie Enden mit Rändern der Aussparungen 120 in Anlage sind. Diese Ränder erstrecken sich bei der dargestellten Anordnung der Schwenkhebel in deren Längsrichtung. Die gegenüberliegenden Ränder verlaufen im wesentlichen senkrecht zur Längsrichtung der Hebebrücke 121.

Bei der vertikalen Verstellung der Schwenkhebel 94 und 95 sind diese in den Führungseinrichtungen 92 geführt. Die Führungseinrichtungen 92 sind im wesentlichen durch zwei beidseitig zu den Schwenkhebeln 94 und 95 angeordnete U-Führungsprofile 103 gebildet. Diese liegen mit ihren U-Stegen einenander gegenüber und sind zur Führung der Schwenkhebel 94 und 95 mit diesen in Anlage.

## Patentansprüche

1. Ultraschallprüfvorrichtung (1) für eine Gasflasche (2) mit wenigstens einem zumindest deren Mantelfläche (3) abtastenden Prüfkopf (4, 5, 6, 7, 8), einer Bewegungseinrichtung (10) zur relativen Bewegung von Gasflasche und Prüfkopf, wobei die Gasflasche (2) mit ihrer als Drehachse ausgebildeten Längsachse (11) im wesentlichen vertikal angeordnet ist,
**dadurch gekennzeichnet,** daß eine Wasserversorgung (9) zur Wasserankopplung des Prüfkopfes an die Mantelfläche vorgesehen ist
daß der Prüfkopf (4-8) in einer wasserspendenden Halterung (13) angeordnet ist, in welcher eine mit der Wasserversorgung (9) über eine Versorgungsleitung (46) zur ausreichenden Zufuhr von Wasser für die Wasserankopplung verbundene Wasserkammer (47) ausgebildet ist, und daß zur Führung der Halterung entlang einer Abtastspur der Prüfkopf (4-8) im wesentlichen entlang der Längsachse (11) beweglich gelagert und ein Ende (14) der Gasflasche (2) drehbar gelagert ist, wobei am anderen Ende (15) der Gasflasche eine Dreheinrichtung (16) mit einem Drehantrieb (22) und einer mit diesem bewegungsverbindbaren Greifvorrichtung (23) für das obere Ende (15) der Gasflasche (2) angeordnet ist, welche Greifvorrichtung (23) zwischen einer Arbeitsstellung und einer Bereitschaftsstellung vertikal bewegbar ist, wobei in Arbeitsstellung die Greifvorrichtung einen Gasflaschenkopf (26) ergreift.

2. Ultraschallprüfvorrichtung nach Anspruch 1, **dadurch gekennzeichnet**, daß das untere Ende (14) auf einem Kugellager (17) drehbar gelagert ist, welches in einer Grundplatte (59) der Ultraschallprüfvorrichtung (1) angeordnet ist.

3. Ultraschallprüfvorrichtung nach Anspruch 2, **dadurch gekennzeichnet, daß das** Kugellager (17) zum Anheben der Gasflasche (2) vertikal verstellbar ist.

4. Ultraschallprüfvorrichtung nach Anspruch 3, **dadurch gekennzeichnet**, daß das Kugellager (17) an einem oberen Ende einer Hubstange (18) ausgebildet ist, deren unteres Ende über Hebel (19, 20) mit einem Hubzylinder (21) verbunden ist.

5. Ultraschallprüfvorrichtung nach Anspruch 4, **dadurch gekennzeichnet**, daß der Hubzylinder (21) im wesentlichen horizontal angeordnet ist.

6. Ultraschallprüfvorrichtung nach Anspruch 1, **dadurch gekennzeichnet,** daß auf einer Grundplatte (59) der Ultraschallprüfvorrichtung (1) wenigstens eine einem Umfangsrand eines Bodens der Gasflasche (2) zuordbare Rolle (89, 90) drehbar gelagert ist.

7. Ultraschallprüfvorrichtung nach Anspruch 6, **dadurch gekennzeichnet**, daß wenigstens eine Rolle (89, 90) relativ zum Gasflaschenboden im wesentlichen radial verstellbar gelagert ist.

8. Ultraschallprüfvorrichtung nach Anspruch 7, **dadurch gekennzeichnet,** daß die Rolle (89, 90) an einem Rollenende eines Schwenkhebels (94, 95, 96, 97) drehbar gelagert ist, wobei der Schwenkhebel an der Grundplatte (59) an seinem anderen Schwenkende zumindest horizontal verschwenkbar gelagert ist.

9. Ultraschallprüfvorrichtung nach Anspruch 8, **dadurch gekennzeichnet,** daß der Schwenkhebel (94, 95) an seinem Schwenkende an einer Schwenkplatte (99) um eine horizontale Schwenkachse (102) verschwenkbar gelagert ist und die Schwenkplatte (99) an der Grundplatte (59) um eine vertikale Schwenkachse (100) verschwenkbar gelagert ist.

10. Ultraschallprüfvorrichtung nach Anspruch 9, **dadurch gekennzeichnet,** daß das Rollenende in einer vertikalen Führung (92, 103) geführt ist.

11. Ultraschallprüfvorrichtung nach wenigstens einem der vorangehenden Ansprüche, **dadurch gekennzeichnet,** daß am Rollenende zur Lagerung einer Rolle (89, 90) eine Lagerplatte (106, 107) ausgebildet ist.

12. Ultraschallprüfvorrichtung nach Anspruch 11, **dadurch gekennzeichnet,** daß die Lagerplatte (106, 107) und/oder die Führung (92, 103) Indexbohrungen (104, 105) zum Verstellen des Schwenkhebels (94, 95, 96, 97) in Abhängigkeit vom Gasflaschendurchmesser aufweist.

13. Ultraschallprüfvorrichtung nach wenigstens einem der vorangehenden Ansprüche, **dadurch gekennzeichnet,** daß auf der Grundplatte (59) vier Schwenkarme (94, 95, 96, 97) angeordnet sind, von denen zwei horizontal und zwei horizontal und vertikal verschwenkbar sind, wobei die beiden horizontal verschwenkbaren Schwenkarme (96, 97) unterhalb der beiden anderen Schwenkarme (94, 95) angeordnet sind.

14. Ultraschallprüfvorrichtung nach wenigstens einem der vorangehenden Ansprüche, **dadurch gekennzeichnet,** daß den horizontal und vertikal verschwenkbaren Schwenkarmen (94, 95) eine Hebeeinrichtung (109, 112) zugeordnet ist.

15. Ultraschallprüfvorrichtung nach wenigstens einem der vorangehenden Ansprüche, **dadurch gekennzeichnet**, daß der Drehantrieb (22) ein mit seiner Antriebsachse (25) parallel zur und in Richtung der Drehachse (11) ausgerichteter bzw. verstellbarer Motor (24) ist.

16. Ultraschallprüfvorrichtung nach wenigstens einem der vorangehenden Ansprüche, **dadurch gekennzeichnet**, daß die Gasflasche (2) von der Greifvorrichtung (23) unter Bildung eines Spitzenwinkels zwischen Längsachse (11) und einer Vertikalen schräg gehalten ist.

17. Ultraschallprüfvorrichtung nach Anspruch 16, **dadurch gekennzeichnet,** daß die Schrägstellung der Gasflasche (2) dadurch bestimmt ist, daß ein vom Schwerpunkt der Gasflasche gefälltes Lot im wesentlichen durch den Umfangsrand des Gasflaschenbodens verläuft.

18. Ultraschallprüfvorrichtung nach wenigstens einem der vorangehenden Ansprüche, **dadurch gekennzeichnet,** daß zur gemeinsamen vertikalen Bewegung von Motor (24) und Greifvorrichtung (23) ein Heb- und Senkzylinder (27) angeordnet ist.

19. Ultraschallprüfvorrichtung nach wenigstens einem der vorangehenden Ansprüche, **dadurch gekennzeichnet,** daß zwischen Motor (24) und Greifvorrichtung (23) eine Kupplung (28) angeordnet ist.

20. Ultraschallprüfvorrichtung nach wenigstens einem der vorangehenden Ansprüche, **dadurch gekennzeichnet,** daß die Greifvorrichtung (23) wenigstens drei verstellbare Greifbacken (29) zum Ergreifen des Gasflaschenkopfes (26) aufweist.

21. Ultraschallprüfvorrichtung nach Anspruch 20, **dadurch gekennzeichnet**, daß zumindest die Greifbacken (29) von einer in Richtung zur Gasflasche (2) offenen Aufnahmeglocke (30) umgeben sind.

22. Ultraschallprüfvorrichtung nach Anspruch 21, **dadurch** gekennzeichnet, daß zur Positionierung der Greifvorrichtung (23) in der Aufnahmeglocke (30) eine Lichtschranke (31) ausgebildet ist.

23. Ultraschallprüfvorrichtung nach Anspruch 22, **dadurch gekennzeichnet**, daß die Lichtschranke (31) eine in der Aufnahmeglocke (30) ausgebildete Lichteintrittsöffnung (32) und eine dieser zugeordnete, außerhalb der Aufnahmeglocke angeordnete Lichtquelle (33) aufweist.

24. Ultraschallprüfvorrichtung nach wenigstens einem der vorangehenden Ansprüche, **dadurch gekennzeichnet,** daß die Ultraschallprüfvorrichtung (1) insbesondere zum Stützen der Gasflasche (2) während der Drehung Stützeinrichtungen (34, 35,) mit an die Mantelfläche (3) verschwenkbaren Klemmarmen (36, 37, 38) aufweist.

25. Ultraschallprüfvorrichtung nach Anspruch 24, **dadurch** **gekennzeichnet**, daß die Klemmarme (36, 37, 38) entlang von vertikalen Führungen (39, 40) verstellbar gelagert sind.

26. Ultraschallprüfvorrichtung nach wenigstens einem der vorangehenden Ansprüche, **dadurch gekennzeichnet,** daß die Stützeinrichtungen (34, 35) beidseitig zur Gasflasche (2) angeordnet sind und die jeweiligen Klemmarme (36, 37, 38) sich einander gegenüberliegen.

27. Ultraschallprüfvorrichtung nach wenigstens einem der vorangehenden Ansprüche, dadurch gekennzeichnet, daß an den der Mantelfläche (3) zugeordneten Enden der Klemmarme (36, 37, 38) Laufrollen (41) zum Abrollen auf der Mantelfläche angeordnet sind.

28. Ultraschallprüfvorrichtung nach wenigstens einem der vorangehenden Ansprüche, dadurch gekennzeichnet, daß die Stützeinrichtung (34, 35) zum stufenlosen Verschwenken wenigstens eines Klemmarmes (36, 37, 38) einen Schwenkzylinder oder eine Spindel (42, 43) aufweist.

29. Ultraschallprüfvorrichtung nach wenigstens einem der vorangehenden Ansprüche, **dadurch gekennzeichnet,** daß die Prüfkopfhalterung (13) in vertikaler und zur Anlage an die Mantelfläche (3) in horizontaler Richtung (12, 44) verstellbar gelagert ist.

30. Ultraschallprüfvorrichtung nach wenigstens einem der vorangehenden Ansprüche, **dadurch gekennzeichnet,** daß die Prüfkopfhalterung (13) zumindest teilkardanisch oder kugelgelagert aufgehängt ist.

31. Ultraschallprüfvorrichtung nach wenigstens einem der vorangehenden Ansprüche, **dadurch gekennzeichnet,** daß die Prüfkopfhalterung (13) einen Adapter (45) für den jeweiligen Gasflaschendurchmesser aufweist.

32. Ultraschallprüfvorrichtung nach wenigstens einem der vorangehenden Ansprüche, **dadurch gekennzeichnet**, daß die Wasserversorgung (9) über eine Versorgungsleitung (46) mit einer in der Prüfkopfhalterung (13) ausgebildeten Wasserkammer (47) verbunden ist.

33. Ultraschallprüfvorrichtung nach wenigstens einem der vorangehenden Ansprüche, **dadurch gekennzeichnet,** daß in einer Umrandung (48) des Adapters (45) ein Spritzwasserschutzring (49) ausgebildet ist.

34. Ultraschallprüfvorrichtung nach wenigstens einem der vorangehenden Ansprüche, dadurch gekennzeichnet, daß am Adapter (45) und/oder Wasserkammer (47) eine Wasserabflußöffnung (50) und/oder eine Luftaustrittsöffnung (51) ausgebildet sind.

35. Ultraschallprüfvorrichtung nach wenigstens einem der vorangehenden Ansprüche, **dadurch gekennzeichnet,** daß die Prüfkopfhalterung (13) und ein als Wasserversorgung (9) ausgebildeter Wasserbehälter (52) in festem, vertikalem Abstand zueinander angeordnet und gemeinsam vertikal bewegbar sind.

36. Ultraschallprüfvorrichtung nach wenigstens einem der vorangehenden Ansprüche, **dadurch gekennzeichnet,** daß zur Aufnahme von Prüfköpfen (4-8) in der Prüfkopfhalterung (13) Fixierbohrungen (53-57) ausgebildet sind.

37. Ultraschallprüfvorrichtung nach wenigstens einem der vorangehenden Ansprüche, **dadurch gekennzeichnet,** daß die Prüfköpfe (5-8) sogenannte "paint brush"-Prüfköpfe sind.

38. Ultraschallprüfvorrichtung nach wenigstens einem der vorangehenden Ansprüche, **dadurch gekennzeichnet,** daß die Prüfköpfe (4-8) zur Speicherung und Auswertung von Messungen mit einer elektronischen Speicher- und Auswerteeinrichtung verbunden sind.

39. Ultraschallprüfvorrichtung nach wenigstens einem der vorangehenden Ansprüche, **dadurch gekennzeichnet,** daß unterhalb der Gasflasche (2) ein Wasserauffangbecken (58) für aus der Prüfkopfhalterung (13) austretendes Wasser angeordnet ist.

40. Ultraschallprüfvorrichtung nach wenigstens einem der vorangehenden Ansprüche, **dadurch gekennzeichnet,** daß das Wasserauffangbecken (58) in der Grundplatte (59) ausgebildet ist und die Schwenkhebel (94, 95, 96, 97) mit ihren Lagerrollen (89, 90) unterhalb einer Wasserlinie angeordnet sind.

41. Ultraschallprüfvorrichtung nach wenigstens einem der vorangehenden Ansprüche, **dadurch gekennzeichnet**, daß die Ultraschallprüfvorrichtung (1) als mobile Einheit mit Grundplatte (59) und Rahmen ausgebildet ist.

42. Ultraschallprüfvorrichtung nach wenigstens einem der vorangehenden Ansprüche, **dadurch gekennzeichnet,** daß wenigstens ein Ultraschallprüfkopf in einer Prüfkopfhalterung (13) auf der Grundplatte (59) zur Abtastung eines Bodens einer Gasflaschen (2) angeordnet ist.

43. Ultraschallprüfvorrichtung nach wenigstens einem der vorangehenden Ansprüche, **dadurch gekennzeichnet**, daß die elektronische Speicher- und Auswerteeinrichtung zur Koordinatendarstellung von Mantelfläche (3) und/oder Bodenfläche der Gasflasche (2) eine Koordinatenzuordnungseinrichtung und eine Ausgabeeinrichtung für die Koordinatendarstellung aufweist.

## Claims

1. Ultrasonic test device (1) for a gas cylinder (2) with at least one test head (4, 5, 6, 7, 8) scanning the surface (3) of the gas cylinder, a displacement device (10) for the relative displacement of gas cylinder and test head, the gas cylinder (2) being arranged with its longitudinal axis (11) constructed as an axis of rotation substantially vertical, characterised in that a water supply (9) is provided for water-coupling the test head to the surface, the test head (4-8) is arranged in a water-dispensing mount (13), in which a water chamber (47) is constructed, which is connected to the water supply (9) via a supply line (46) for the adequate supply of water for the water coupling, and in order to guide the mount along a scanning track, the test head (4-8) is mounted so as to be displaceable substantially along the longitudinal axis (11) and one end (14) of the gas cylinder (2) is rotatably mounted, a rotary device (16) with a rotary drive (22) and a gripping device (23), which is connectable for movement to the rotary drive for the upper end (15) of the gas cylinder (2) being arranged at the other end (15) of the gas cylinder (2), the gripping device (23) being vertically displaceable between an operating position and a ready position and grasping a gas cylinder head (26) in the operating position.

2. Ultrasonic test device according to claim 1, characterised in that the lower end (14) is rotatably mounted on a ball bearing (17), which is arranged in a base plate (59) of the ultrasonic test device (1).

3. Ultrasonic test device according to claim 2, characterised in that the ball bearing (17) is vertically adjustable in order to lift the gas cylinder (2).

4. Ultrasonic test device according to claim 3, characterised in that the ball bearing (17) is constructed at an upper end of a lifting mechanism (18), whose lower end is connected via levers (19, 20) to a lifting cylinder (21).

5. Ultrasonic test device according to claim 4, characterised in that the lifting cylinder (21) is arranged substantially horizontal.

6. Ultrasonic test device according to claim 1, characterised in that at least one roller (89, 90), which can be associated with a circumferential edge of a base of the gas cylinder (2), is rotatably mounted on a base plate (59) of the ultrasonic test device (1).

7. Ultrasonic test device according to claim 6, characterised in that at least one roller (89, 90) is mounted so as to be substantially radially adjustable relative to the gas cylinder base.

8. Ultrasonic test device according to claim 7, characterised in that the roller (89, 90) is rotatably mounted on a roller end of a pivot lever (94, 95, 96, 97), the pivot lever being mounted at its other pivot end on the base plate (59) so as to be at least horizontally pivotable.

9. Ultrasonic test device according to claim 8, characterised in that the pivot lever (94, 95) is mounted at its pivot end on a pivot plate (99) so as to pivot about a horizontal pivot axis (102) and the pivot plate (99) is mounted on the base plate (59) so as to pivot about a vertical pivot axis (100).

10. Ultrasonic test device according to claim 9, characterised in that the roller end is guided in a vertical guide (92, 103).

11. Ultrasonic test device according to at least one of the preceding claims, characterised in that a mounting plate (106, 107) is constructed at the roller end for mounting a roller (89, 90).

12. Ultrasonic test device according to claim 11, characterised in that the mounting plate (106, 107) and/or the guide (92, 103) comprises index bores (104, 105) for adjusting the pivot lever (94, 95, 96, 97) as a function of the gas cylinder diameter.

13. Ultrasonic test device according to at least one of the preceding claims, characterised in that four pivot arms (94, 95, 96, 97) are arranged on the base plate (59), of which two are horizontally pivotable and two are horizontally and vertically pivotable, the two horizontally pivotable pivot arms (96, 97) being arranged beneath the two other pivot arms (94, 95).

14. Ultrasonic test device according to at least one of the preceding claims, characterised in that a lifting device (109, 112) is associated with the horizontally and vertically pivotable pivot arms (94, 95).

15. Ultrasonic test device according to at least one of the preceding claims, characterised in that the rotary drive (22) is a motor (24) whose drive axle (25) is aligned parallel to or is adjustable in the direction of the axis of rotation (11).

16. Ultrasonic test device according to at least one of the preceding claims, characterised in that the gas cylinder (2) is held at an angle by the gripping device (23) to form an acute angle between the longitudinal axis (11) and a vertical.

17. Ultrasonic test device according to claim 16, characterised in that the inclined position of the gas cylinder (2) is determined in that a plumb line dropped from the centre of gravity of the gas cylinder extends substantially through the circumferential edge of the gas cylinder base.

18. Ultrasonic test device according to at least one of the preceding claims, characterised in that a lifting and lowering cylinder (27) is arranged for the common vertical movement of motor (24) and gripping device (23).

19. Ultrasonic test device according to at least one of the preceding claims, characterised in that a coupling (28) is arranged between motor (24) and gripping device (23).

20. Ultrasonic test device according to at least one of the preceding claims, characterised in that the gripping device (23) comprises at least three adjustable gripping jaws (29) for gripping the gas cylinder head (26).

21. Ultrasonic test device according to claim 20, characterised in that at least the gripping jaws (29) are enclosed by a receiving bell (30) which opens in the direction of the gas cylinder (2).

22. Ultrasonic test device according to claim 21, characterised in that a light barrier (31) is constructed for positioning the gripping device (23) in the receiving bell (30).

23. Ultrasonic test device according to claim 22, characterised in that the light barrier (31) comprises a light inlet aperture (32) constructed in the receiving bell (30) and a light source (33) associated with said light inlet aperture (32) and arranged outside the receiving bell.

24. Ultrasonic test device according to at least one of the preceding claims, characterised in that the ultrasonic test device (1) comprises support devices (34, 35) with clamping arms (36, 37, 38) pivotable onto the surface (3), more particularly for supporting the gas cylinder (2) during rotation.

25. Ultrasonic test device according to claim 24, characterised in that the clamping arms (36, 37, 38) are mounted so as to be adjustable along vertical guides (39, 40).

26. Ultrasonic test device according to at least one of the preceding claims, characterised in that the support devices (34, 35) are arranged either side of the gas cylinder (2) and the respective clamping arms (36, 37, 38) lie opposite one another.

27. Ultrasonic test device according to at least one of the preceding claims, characterised in that running rollers (41) for rolling on the surface are arranged at the ends of the clamping arms (36, 37, 38) associated with the surface (3).

28. Ultrasonic test device according to at least one of the preceding claims, characterised in that the support device (34, 35) comprises a pivot cylinder or a spindle (42, 43) for the continuously variable pivoting of at least one clamping arm (36, 37, 38).

29. Ultrasonic test device according to at least one of the preceding claims, characterised in that the test head mount (13) is mounted so as to be adjustable in the vertical direction (12) and to abut against the surface (3) in the horizontal direction (44).

30. Ultrasonic test device according to at least one of the preceding claims, characterised in that the test head mount (13) is suspended at least partially via a cardan joint or via a ball bearing.

31. Ultrasonic test device according to at least one of the preceding claims, characterised in that the test head mount (13) comprises an adapter (45) for the respective gas cylinder diameter.

32. Ultrasonic test device according to at least one of the preceding claims, characterised in that the water supply (9) is connected via a supply line (46) to a water chamber (47) constructed in the test head mount (13).

33. Ultrasonic test device according to at least one of the preceding claims, characterised in that a spray protection ring (49) is constructed in a border (48) of the adapter (45).

34. Ultrasonic test device according to at least one of the preceding claims, characterised in that a water outflow aperture (50) and/or an air outflow aperture (51) are constructed on the adapter (45) and/or water chamber (47).

35. Ultrasonic test device according to at least one of the preceding claims, characterised in that the test head mount (13) and a water receptacle (52) constructed as a water supply (9) are arranged at a fixed, vertical distance from one another and are vertically displaceable together.

36. Ultrasonic test device according to at least one of the preceding claims, characterised in that fixing bores (53-57) are constructed for receiving test heads (4-8) in the test head mount (13).

37. Ultrasonic test device according to at least one of the preceding claims, characterised in that the test heads (5-8) are so-called "paint brush" test heads.

38. Ultrasonic test device according to at least one of the preceding claims, characterised in that the test heads (5-8) are connected to an electronic storing and evaluating device for storing and evaluating measurements.

39. Ultrasonic test device according to at least one of the preceding claims, characterised in that a water collecting basin (58) for water emerging from the test head mount (13) is arranged beneath the gas cylinder (2).

40. Ultrasonic test device according to at least one of the preceding claims, characterised in that the water collecting basin (58) is constructed in the base plate (59) and the pivot levers (94, 95, 96, 97) are arranged with their bearing rollers (89, 90) beneath a water line.

41. Ultrasonic test device according to at least one of the preceding claims, characterised in that the ultrasonic test device (1) is constructed as a mobile unit with base plate (59) and frame.

42. Ultrasonic test device according to at least one of the preceding claims, characterised in that at least one ultrasonic test head is arranged in a test head mount (13) on the base plate (59) for scanning a base of a gas cylinder (2).

43. Ultrasonic test device according to at least one of the preceding claims, characterised in that the electronic storing and evaluating device comprises a coordinate allocating device for displaying coordinates of the surface(3) and/or tha base surface of the gas cylinder (2) and a display device for the coordinates.

## Revendications

1. Dispositif de contrôle par ultrasons (1) pour une bouteille de gaz (2) avec au moins un palpeur (4, 5, 6, 7, 8) palpant au moins la surface de l'enveloppe (3) de ladite bouteille de gaz, un dispositif de déplacement (10) pour le déplacement relatif de la bouteille de gaz et du palpeur, la bouteille de gaz (2) étant pour l'essentiel disposée de façon verticale avec son axe longitudinal (11) formé en tant qu'axe de rotation,
caractérisé en ce
qu'une alimentation en eau (9) est prévue pour le couplage par eau du palpeur à la surface de l'enveloppe, que le palpeur (4 - 8) est disposé dans un support distribuant de l'eau (13), dans lequel est formée une chambre à eau (47) liée avec l'alimentation en eau (9) par l'intermédiaire d'une conduite d'alimentation (46) pour l'approvisionnement suffisant en eau pour le couplage par eau, et que pour le guidage du support le long d'une trace de palpage, le palpeur (4 - 8) est essentiellement monté de façon mobile le long de l'axe longitudinal (11) et une extrémité (14) de la bouteille de gaz (2) est montée de façon à pouvoir tourner, un dispositif de rotation (16) étant disposé à l'autre extrémité (15) de la bouteille de gaz avec un moteur de rotation (22) et un dispositif de saisie (23), raccordable par mouvement avec ledit moteur de rotation, pour l'extrémité supérieure (15) de la bouteille de gaz (2), lequel dispositif de saisie (23) est mobile de façon verticale entre une position de fonctionnement et une position de disponibilité, le dispositif de saisie saisissant dans la position de fonctionnement une tête de bouteille de gaz (26).

2. Dispositif de contrôle par ultrasons selon la revendication 1, caractérisé en ce que l'extrémité inférieure (14) est montée de façon à pouvoir tourner sur un roulement à billes (17), lequel est disposé dans une plaque d'assise (59) du dispositif de contrôle par ultrasons (1).

3. Dispositif de contrôle par ultrasons selon la revendication 2, caractérisé en ce que le roulement à billes (17) est déplaçable de façon verticale afin de soulever la bouteille de gaz (2).

4. Dispositif de contrôle par ultrasons selon la revendication 3, caractérisé en ce que le roulement à billes (17) est formé à une extrémité supérieure d'une tige de levage (18), l'extrémité inférieure de ladite tige de levage étant liée par l'intermédiaire de leviers (19, 20) avec un cylindre de levage (21).

5. Dispositif de contrôle par ultrasons selon la revendication 4, caractérisé en ce que le cylindre de levage (21) est disposé pour l'essentiel de façon horizontale.

6. Dispositif de contrôle par ultrasons selon la revendication 1, caractérisé en ce que sur une plaque d'assise (59) du dispositif de contrôle par ultrasons (1), au moins un rouleau (89, 90) attribuable à un bord périphérique du fond de la bouteille de gaz (2), est monté de façon à pouvoir tourner.

7. Dispositif de contrôle par ultrasons selon la revendication 6, caractérisé en ce qu'au moins un rouleau (89, 90) est monté de manière à être réglable pour l'essentiel de façon radiale par rapport au fond de la bouteille de gaz.

8. Dispositif de contrôle par ultrasons selon la revendication 7, caractérisé en ce que le rouleau (89, 90) est monté à une extrémité pour rouleau d'un levier pivotant (94, 95, 96, 97) de façon à pouvoir tourner, le levier pivotant étant monté sur la plaque d'assise (59) de façon à pouvoir pivoter au moins de façon horizontale au niveau de son autre extrémité pivotante.

9. Dispositif de contrôle par ultrasons selon la revendication 8, caractérisé en ce que le levier pivotant (94, 95) est monté de façon à pouvoir pivoter au niveau de son extrémité pivotante sur une plaque pivotante (99) autour d'un axe horizontal de pivotement (102) et la plaque pivotante (99) est montée sur la plaque d'assise (59) de façon à pouvoir pivoter autour d'un axe vertical de pivotement (100).

10. Dispositif de contrôle par ultrasons selon la revendication 9, caractérisé en ce que l'extrémité pour rouleau est guidée dans une glissière de guidage (92, 103) verticale.

11. Dispositif de contrôle par ultrasons selon au moins l'une des revendications précédentes, caractérisé en ce qu'à l'extrémité pour rouleau est formée une plaque de montage (106, 107) pour l'installation d'un rouleau (89, 90).

12. Dispositif de contrôle par ultrasons selon la revendication 11, caractérisé en ce que la plaque de montage (106, 107) et/ou la glissière de guidage (92, 103) présente des perçages d'indexation (104, 105) pour le réglage du levier pivotant (94, 95, 96, 97) en fonction du diamètre de la bouteille de gaz.

13. Dispositif de contrôle par ultrasons selon au moins l'une des revendications précédentes, caractérisé en ce que sont disposés sur la plaque d'assise (59) quatre bras pivotants (94, 95, 96, 97), deux des bras pivotants pouvant pivoter de façon horizontale et deux de façon horizontale et verticale, les deux bras pivotants de façon horizontale (96, 97) étant disposés en dessous des deux autres bras pivotants (94, 95).

14. Dispositif de contrôle par ultrasons selon au moins l'une des revendications précédentes, caractérisé en ce qu'un dispositif de levage (109, 112) est attribué aux bras pivotants (94, 95) de façon horizontale et verticale.

15. Dispositif de contrôle par ultrasons selon au moins l'une des revendications précédentes, caractérisé en ce que le moteur de rotation (22) est un moteur (24) orienté respectivement pouvant être déplacé avec son axe moteur (25) parallèlement à et en direction de l'axe de rotation (11).

16. Dispositif de contrôle par ultrasons selon au moins l'une des revendications précédentes, caractérisé en ce que la bouteille de gaz (2) est maintenue inclinée par le dispositif de saisie (23) par formation d'un angle aigu entre l'axe longitudinal (11) et une verticale.

17. Dispositif de contrôle par ultrasons selon la revendication 16, caractérisé en ce que la position inclinée de la bouteille de gaz (2) est déterminée en ce qu'une verticale abaissée à partir du centre de gravité de la bouteille de gaz passe pour l'essentiel par le bord périphérique du fond de la bouteille de gaz.

18. Dispositif de contrôle par ultrasons selon au moins l'une des revendications précédentes, caractérisé en ce qu'un cylindre de levage et de descente (27) est disposé pour le mouvement vertical commun du moteur (24) et du dispositif de saisie (23).

19. Dispositif de contrôle par ultrasons selon au moins l'une des revendications précédentes, caractérisé en ce qu'un dispositif d'accouplement (28) est disposé entre le moteur (24) et le dispositif de saisie (23).

20. Dispositif de contrôle par ultrasons selon au moins l'une des revendications précédentes, caractérisé en ce que le dispositif de saisie (23) présente au moins trois mâchoires de prise (29) déplaçable pour la saisie de la tête de la bouteille de gaz (26).

21. Dispositif de contrôle par ultrasons selon la revendication 20, caractérisé en ce qu'au moins les mâchoires de prise (29) sont entourées par une cloche de prise (30) ouverte en direction de la bouteille de gaz (2).

22. Dispositif de contrôle par ultrasons selon la revendication 21, caractérisé en ce qu'un barrage photoélectrique (31) est formé pour le positionnement du dispositif de saisie (23) dans la cloche de prise (30).

23. Dispositif de contrôle par ultrasons selon la revendication 22, caractérisé en ce que le barrage photoélectrique (31) présente une ouverture d'entrée de la lumière (32) formée dans la cloche de prise (30) et une source de lumière (33), attribuée à ladite ouverture, disposée en dehors de la cloche de prise.

24. Dispositif de contrôle par ultrasons selon au moins l'une des revendications précédentes, caractérisé en ce que le dispositif de contrôle par ultrasons (1) présente, en particulier pour soutenir la bouteille de gaz (2) pendant la rotation, des dispositifs de support (34, 35) avec des bras de serrage (36, 37, 38) pivotants contre la surface de l'enveloppe (3).

25. Dispositif de contrôle par ultrasons selon la revendication 24, caractérisé en ce que les bras de serrage (36, 37, 38) sont montés de façon réglable le long de glissières de guidage (39, 40) verticales.

26. Dispositif de contrôle par ultrasons selon au moins l'une des revendications précédentes, caractérisé en ce que les dispositifs de support (34, 35) sont disposés des deux côtés de la bouteille de gaz (2) et les bras de serrage respectifs (36 ,37, 38) se font face les uns les autres.

27. Dispositif de contrôle par ultrasons selon au moins l'une des revendications précédentes, caractérisé en ce que des galets de roulement (41) sont disposés aux extrémités des bras de serrage (36, 37, 38) attribués à la surface de l'enveloppe (3), afin de rouler sur la surface de l'enveloppe.

28. Dispositif de contrôle par ultrasons selon au moins l'une des revendications précédentes, caractérisé en ce que le dispositif de support (34, 35) présente pour le pivotement continu d'au moins un bras de serrage (36, 37, 38), un cylindre de pivotement ou un arbre (42, 43).

29. Dispositif de contrôle par ultrasons selon au moins l'une des revendications précédentes, caractérisé en ce que le support du palpeur (13) est monté de façon réglable selon la direction verticale ainsi que selon la direction horizontale (12, 44) pour le contact contre la surface de l'enveloppe.

30. Dispositif de contrôle par ultrasons selon au moins l'une des revendications précédentes, caractérisé en ce que le support du palpeur (13) est suspendu au moins en partie à la Cardan ou monté sur roulement à billes.

31. Dispositif de contrôle par ultrasons selon au moins l'une des revendications précédentes, caractérisé en ce que le support du palpeur (13) présente un adaptateur (45) pour le diamètre correspondant de la bouteille de gaz.

32. Dispositif de contrôle par ultrasons selon au moins l'une des revendications précédentes, caractérisé en ce que l'alimentation en eau (9) est reliée par l'intermédiaire d'une conduite d'alimentation (46) avec une chambre à eau (47) formée dans le support du palpeur (13).

33. Dispositif de contrôle par ultrasons selon au moins l'une des revendications précédentes, caractérisé en ce que dans une bordure (48) de l'adaptateur (45) est formé un anneau de protection contre les projections d'eau (49).

34. Dispositif de contrôle par ultrasons selon au moins l'une des revendications précédentes, caractérisé en ce qu'au niveau de l'adaptateur (45) et/ou de la chambre à eau (47) sont formées une ouverture d'écoulement d'eau (50) et / ou une ouverture de sortie d'air (51).

35. Dispositif de contrôle par ultrasons selon au moins l'une des revendications précédentes, caractérisé en ce que le support du palpeur (13) et un réservoir d'eau (52) formé en tant qu'alimentation en eau (9) sont disposés à une distance fixe et verticale l'un de l'autre et sont mobiles ensemble de façon verticale.

36. Dispositif de contrôle par ultrasons selon au moins l'une des revendications précédentes, caractérisé en ce que sont formés dans le support du palpeur (13) des perçages de fixation (53-57) pour le positionnement des palpeurs (4-8).

37. Dispositif de contrôle par ultrasons selon au moins l'une des revendications précédentes, caractérisé en ce que les palpeurs (5-8) sont des palpeurs de type "paint brush".

38. Dispositif de contrôle par ultrasons selon au moins l'une des revendications précédentes, caractérisé en ce que les palpeurs (4-8) sont reliés avec un dispositif électronique de mémorisation et d'exploitation pour la mémorisation et l'exploitation des mesures.

39. Dispositif de contrôle par ultrasons selon au moins l'une des revendications précédentes, caractérisé en ce qu'en dessous de la bouteille de gaz (2) est disposé un bac de réception d'eau (58) pour l'eau sortant du support du palpeur (13).

40. Dispositif de contrôle par ultrasons selon au moins l'une des revendications précédentes, caractérisé en ce que le bac de réception d'eau (58) est formé dans la plaque d'assise (59) et en ce que les leviers pivotants (94, 95, 96, 97) avec leurs rouleaux (89, 90) sont disposés en dessous du niveau de l'eau.

41. Dispositif de contrôle par ultrasons selon au moins l'une des revendications précédentes, caractérisé en ce que le dispositif de contrôle par ultrasons (1) est formé en tant qu'unité mobile avec plaque d'assise (59) et cadre.

42. Dispositif de contrôle par ultrasons selon au moins l'une des revendications précédentes, caractérisé en ce qu'au moins un palpeur à ultrasons est disposé dans un support du palpeur (13) sur la plaque d'assise (59) pour le palpage d'un fond d'une bouteille de gaz (2).

43. Dispositif de contrôle par ultrasons selon au moins l'une des revendications précédentes, caractérisé en ce que le dispositif électronique de mémorisation et d'exploitation pour la représentation en coordonnées de la surface de l'enveloppe (3) et / ou de la surface de fond de la bouteille de gaz (2) présente un dispositif d'attribution des coordonnées et un dispositif de sortie pour la représentation en coordonnées.
